# EUROPEAN PATENT SPECIFICATION

(11) **EP 4 102 986 B1**
(45) Date of publication and mention of the grant of the patent: **08.04.2026**
(21) Application number: 21754432.9
(22) Date of filing: 09.02.2021
(51) Int. Cl.: A23K 10/20, A01K 15/02, A23K 10/30, A23K 40/20, A23K 40/25, A23K 50/42

(54) **EXPANDED DRY PRODUCT FOR CALORIC RESTRICTION AND SATIETOGENIC EFFECT**
EXPANDIERTES TROCKENPRODUKT ZUR KALORISCHEN RESTRIKTION
PRODUIT SEC EXPANSÉ POUR UNE RESTRICTION CALORIQUE

(30) Priority: 10.02.2020 EP 20305125
(43) Date of publication of application: 21.12.2022
(73) Proprietor: MARS, INCORPORATED, McLean, Virginia 22101 (US)
(72) Inventor: TRASSY, Laura, 30470 Aimargues (FR); DOUBLI-BOUNOUA, Nadia, 30470 Aimargues (FR)
(74) Representative: Ipsilon
(86) International application number: PCT/US2021/070134
(87) International publication number: WO 2021/163719

(56) References cited:
- WO-A1-01/45517
- WO-A2-2004/080198
- US-A- 5 932 258
- US-A1- 2010 160 237
- US-A1- 2016 073 659
- US-A1- 2016 198 742
- US-A1- 2016 330 998
- BURKHOLDER W J ET AL: "TIMELY TOPICS IN NUTRITION. FOODS AND TECHNIQUES FOR MANAGING OBESITY IN COMPANION ANIMALS", JOURNAL OF THE AMERICAN VETERINARY MEDICAL ASSOCIATION, AMERICAN VETERINARY MEDICAL ASSOCIATION, US, vol. 212, no. 5, 1 January 1988 (1988-01-01), pages 658 - 662, XP000866318, ISSN: 0003-1488
- DIEZ M ET AL: "WEIGHT LOSS IN OBESE DOGS: EVALUATION OF A HIGH-PROTEIN, LOW-CARBOHYDRATE DIET", THE JOURNAL OF NUTRITION, AMERICAN SOCIETY FOR NUTRITION, US, vol. 132, no. 6, SUPPL. 02, 1 June 2002 (2002-06-01), pages 1685S - 1687S, XP008013139, ISSN: 0022-3166

## Description

The present disclosure relates to low-density food compositions, in particular to low-density expanded food compositions with an empty cavity or hole, and their use for weight management.

In recent years, it has become more and more important to tackle as early as possible weight issues in domestic animals, in particular in dogs and cats. Management of overweight and obesity has become a priority for pets' owners, veterinarians, and pets' food manufacturers.

Various strategies may be implemented to control food intake, and notably caloric intake, by an animal in order to manage weight issues, in particular to manage weight in overweight or obese animals. Caloric intake can be controlled by feeding low calorie pet foods or feeding a smaller amount of regular calorie pet food. Low calorie pet foods achieve low energy density by having increased fiber levels and decreased fat levels in the diets, often resulting in a less palatable food. Also, because pets consume less of this product, owners often feel the need to compensate by feeding more treats to the pet. The treats provide additional calories, resulting in continued weight gain. Furthermore, while compliance with feeding instructions often results in the loss of body weight, there is a risk of losing lean body mass along with loss of body fat. Another possible strategy to reduce caloric intake is to decrease the caloric density of the foodstuff by increasing its volume by embedding air inside its structure, such as in expanded or puffed food compositions. Low-density volume foodstuff allows to reduce calories intake by an animal. Indeed, the increase of volume of the swallowed food, and therefore of food bowl, provides a satiating effect and helps in slowing down the food intake rate and therefore the daily calories intake.

A low energy-dense, expanded, animal's food is described in US 7,678,406 which has a volume density lower than 240kg/m³ and comprise high amylose starch and a long chain amylose. However, this foodstuff does not contain a sufficient amount of proteins and fibers to be able to contribute significantly to weight management or to control overweight or obesity. Such high amylose starch and long chain amylose consist generally in non-natural starch and more generally chemically modified starch (pregelatinized starch). This pregelatinized starch can be prepared by cooking or acid hydrolysis to give its texturing properties. If it is cooked a second time in the extruder, it can be subject to over-processing with the effects of degradation of the material and the appearance of potentially dangerous and negative unwanted molecules.

US 5 932 258 describes a composition for improving glucose metabolism in companion animals.Obesity is a condition associated with impaired glucose metabolism (column 1, line 9-13). The pet food composition contains 25 to 35 % of crude protein, 5 to 20 % dietary fibers and starch including sorghum and barley.

WO 01/45517 deals with edible pet chews comprising 30-50 % protein, 20-50 % starch, 1-10 % edible fibers, 10-20 % water as an edible thermoplastic composition.

WO 2004/080198 deals with low-energy pet food products containing 25-40 % protein, 5-30 % pregelled starches, 15-50 % cereal grains, 1-30 % high amylose cereal starch.

US 2010/160237 deals with dry feedstuff for dogs intended to control their excess weight and obesity. The feedstuff contains at least 35 % protein, less than 20 % starch and at least 10 % crude fiber. The feedstuff can be in the form of extruded croquette, flake, granules, biscuit.

US 2016/330998 deals with expanded pet food products containing 20 to 80 % starch that forms the porous matrix after extrusion and expansion of dough, 5-20 % protein and fibers.

On the other hand, it is known that proteins and fibers are negative in terms of expansion, and too much of them in a formulation may prevent expansion or drastically reduced expansion of the composition, and thereby prevent obtaining an expanded food with a sufficient low-density volume and low-caloric density.

In conventional manufacture of expanded food products, raw pet food materials are hydrated, heated and mixed during the preconditioning process to form a dough. Additional liquids, such as oils, fats and colorants can also be added in this preconditioning step. Preconditioners can utilize steam and water at levels sufficient to initiate starch gelatinization while hydrating and mixing the materials. In such conventional systems, the dough enters an extruder from the discharge of the pre-conditioner and is pushed through the extruder and forced through orifices of a die plate. Additional moisture can be added at this step to further hydrate the dough and control the texture of the final product. Steam can also be added during this process to further cook the dough and/or provide density control. Upon passing the dough through orifices of a die plate to form an extrudate. The difference of pressure between the extruder and the exit at the die plate allows the extrudate to expand. The extrudate usually has large amounts of moisture and needs to be additionally dried by a separate dryer to achieve a composition that is safe for consumption. Because of specific amounts of proteins and fibers, and relatively low amount of starch in the new compositions of the disclosure, such conventional processes to obtain expanded food compositions appear ill-adapted to those new compositions.

Therefore, there is a need to provide low-volume density, such as expanded, food compositions containing high amount of protein and/or fiber. There is a need to provide low-caloric density food compositions containing high amount of protein and/or fiber. There is a need to provide low-volume density and low-caloric density food compositions.

There is a need to provide highly aerated (high porosity) food compositions.

There is a need to provide low-volume density food compositions able to slow-down food intake by an animal, and notably to prevent binge food intake by an animal.

There is a need to provide low-volume density food compositions able to generate a complete satiating effect while reducing the calorie intake.

There is a need to provide low-volume density food compositions able to be used in a method for managing or controlling weight in an animal, and notably in a method for preventing overweight in an animal. There is a need to provide low-caloric density food compositions able to provide a suitable satietogenic effect.

There is a need to provide low-density food compositions which are less breakable and therefore easier to handle and store.

There is a need to provide low-density food compositions which maintain an appetizing aspect for the animals and pets' owners.

There is a need to provide a method of manufacturing allowing to obtain low-density food compositions, in particular low-density food kibbles.

There is a need to provide a method of manufacturing allowing to obtain expanded low-density food compositions with high amount of proteins and fibers and relatively low amount of starch

The present disclosure aims at satisfying all or part of those needs.

The present invention relates to a dry food composition having a caloric density ranging from about 530 kCal/L to about 800 kCal/L and including, by weight relative to the total weight of said composition:
a. protein in an amount ranging from about 20% to about 36%,
b. total dietary fibers in an amount ranging from about 15% to about 30%, and
c. starch in an amount ranging from about 15% to about 32%,

wherein the food composition is characterized in that it has a porosity ranging of from about 40% to about 70%,
the composition being cylinder-like kibbles comprising a central or substantially cylinder-like empty cavity, each kibble defining a total volume and comprising, within said total volume, at least one empty cavity comprising at least one aperture and said cavity representing a volume of at least 20% of the total volume, the kibble having an external diameter ranging from 8 mm to 25 mm, an internal diameter ranging from 2 mm to 15 mm, and a longitudinal dimension from 5 mm to 22 mm.

A low-density food composition of the disclosure is an expanded composition.

As shown in the examples, disclosed herein are new formulations for an expanded, low-volume density, low-caloric density, dry food composition able to provide an appropriate compromise between low volume density and product's cosmetic and the health's benefit. Surprisingly, by working on three different axes: formula, shape and process, the present disclosure includes an advantageous formula for a food composition which can contain a high level of fibers and proteins while remaining able to be expandable to minimize the volume density. Further, as shown in the examples, the present disclosure includes a specific shape to the food composition so as to further reduce the volume density. In particular embodiments, the shape is a hollow cylinder-like kibble which advantageously increases the volume effect.
Advantageously, a food composition of the disclosure is a low-caloric density composition. Advantageously, a food composition of the disclosure is a low-volume density composition. According to another advantage, a composition of the disclosure can be expanded so as to be an efficient low-volume density, low-caloric density, high volume composition.

According to another advantage, a food composition of the disclosure may be used to manage or control food intake in an animal. Further, a food composition of the disclosure may be used to reduce calorie intake in an animal. A food composition of the disclosure may be particularly useful to prevent or reduce binge food eating by animal. Further, a food composition of the disclosure may be particularly useful to prevent or treat overweight or obesity in an animal in need thereof. According to an advantage, a food composition of the disclosure may generate a complete satiating effect while reducing the calorie intake.

According to another advantage, a food composition of the disclosure may present an appetizing aspect. Further, a food composition, when presented in a bowl to an animal, by its high-volume aspect, may give to the animal a comforting feeling that the bowl is full while it contains a reduced portion of calorie intake. According to another advantage, a food composition of the disclosure may be particularly useful to help an animal to adhere to and to comply with a low-caloric diet regimen.

Further, according to another advantage, the food composition of the disclosure is particularly resistant to breakage which allows to confer and maintain an appetizing visual aspect. Further, its resistance to breakage allows a food composition of the disclosure to be easily handled and stored. This advantage was particularly surprising for such a low-density compound, considering more particularly both the high porosity and the high volume of the empty cavity. The resistance to breakage of the compositions of the disclosure, such as kibbles, allows for an improved durability and storage, and easier handling. The compositions of the disclosure, such as kibbles, have a breakage rate equal or less than about 7%, preferably equal or less than about 6%, preferably equal or less than about 5%, preferably equal or less than about 4%, preferably equal or less than about 3%, preferably equal or less than about 2%, preferably equal or less than about 1% and most preferably ranging from about 0.5 to about 0.7%. relative to the total amount of compositions or kibbles.

According to embodiments, the dry food composition of the invention has a porosity from about 40% to about 70%, preferentially from about 49% to about 68%, preferentially from about 45% to about 65%, and more preferably from about 55% to about 65% relative to the total volume of the composition.
the dry food composition of the disclosure is composed of discrete elements, which are cylinder-like kibbles comprising a central or a substantially central cylinder-like empty cavity
each discrete element defining a total volume and comprising, within said total volume, at least one empty cavity comprising at least one aperture and said cavity representing a volume of at least about 20%, preferably at least about 25% of the total volume the discrete element.

According to one embodiment, the volume of the cavity in each of the discrete elements may represent from about 20% to about 70%, preferably from about 25% to about 65%, and preferably represents from about 30% to about 60%, and more preferably represents from about 40% to about 50% of the total volume of said discrete element.

According to one embodiment, the empty cavity includes at least two apertures, and preferably includes no more than two apertures.

According to one embodiment, the discrete elements may have a shape with a substantially circular or oval transversal cross-section.

According to one embodiment, the discrete elements may have a cylinder-like shape with a central hole comprising two opening at each extremity of said cylinder, said hole representing a volume of about 20 to about 70% of the total volume of each discrete element.
the discrete elements have a substantially circular or oval cross-sectional shape having an external diameter and an internal diameter, said external diameter is ranging from about 8 mm to about 25 mm, preferably from about 10 mm to about 20 mm, and more preferably from about 11 mm to about 18 mm, and said internal diameter is ranging from about 2 mm to about 15 mm, preferably from about 2 mm to about 12 mm.

According to one embodiment, the discrete elements may have a ratio of external diameter over internal diameter ranging from about 1.5 to about 4, preferably from about 2 to about 3.

The discrete elements have a longitudinal dimension ranging from about 5 mm to about 22 mm, preferably from about 7 mm to about 20 mm, and more preferably from about 9 mm to about 17 mm.

According to one embodiment, the discrete elements may have a ratio of length over width ranging from about 1.0 to about 1.5, preferably from about 1.1 to about 1.3 and more preferably of about 1.2.

According to another embodiment, the dry food composition of the disclosure may include vegetal proteins.

According to another embodiment, the dry food composition of the disclosure may include proteins at least partially hydrolyzed, and preferably totally hydrolyzed.

According to one embodiment, the dry food composition of the disclosure may include as only source of proteins, partially or totally hydrolyzed vegetal proteins, and preferably totally hydrolyzed vegetal proteins.

According to one embodiment, the vegetal proteins are soy proteins.

According to another embodiment, the dry food composition of the disclosure may include a starch chosen among wheat, barley, wheat flour, corn flour, rice, potatoes, peas, and oat.

According to one embodiment, the starch may be a cereal starch.

According to one embodiment, the cereal starch may be a natural cereal starch.

According to one embodiment, the starch may be a starch, preferably cereal starch, having an amylose to amylopectin ratio not exceeding about 30:70, preferentially not exceeding about 25:75, and still more preferentially not exceeding about 20:80, and more preferably being about 15:85.

According to another embodiment, the dry food composition of the disclosure may have fat in an amount ranging from about 5% to about 15%, preferentially from about 8% to about 12.5% by weight relative to the total weight of said composition.

According to another embodiment, the dry food composition of the disclosure may have a moisture content in an amount less than about 15% of water or moisture per total weight of the composition, preferably less than about 10% of water or moisture, preferably from about 6% to about 10%, and more preferably from about 5% to about 9% of water or moisture per total weight of the composition.

According to another embodiment, the dry food composition of the disclosure may have a caloric density ranging from 550 kCal/L to about 770 kCal/L.

According to another embodiment, the dry food composition of the disclosure may have a volume density ranging from about 150 g/L to about 300 g/L, more preferably from about 160 g/L to about 270 g/L, and more preferably from about 180 g/L to about 250 g/L, and more preferably from about 190 g/L to about 240 g/L.

According to another embodiment, the dry food composition of the disclosure is a nutritionally complete food or a functional complement.

According to another embodiment, the dry food composition of the disclosure, the use of a composition according to the disclosure, or the method of the disclosure may be for animal which is a pet, and preferentially is a cat or a dog.

### Definitions

The terms used in this specification generally have their ordinary meanings in the art, within the context of this disclosure and in the specific context where each term is used. Certain terms are discussed below, or elsewhere in the specification, to provide additional guidance in describing the compositions and methods of the disclosure and how to make and use them. The following definitions are provided for the present specification, including the claims.

The term "about" or "approximately" means within an acceptable error range for the particular value as determined by one of ordinary skill in the art, which will depend in part on how the value is measured or determined, *i.e.,* the limitations of the measurement system. For example, "about" can mean within three or more than three standard deviations, per the practice in the art. Alternatively, "about" can mean a range of up to 20%, preferably up to 10%, more preferably up to 5%, and more preferably still up to 1% of a given value. Also, particularly with respect to systems or processes, the term can mean within an order of magnitude, preferably within five-fold, and more preferably within two-fold, of a value.

"Aerated" (or "whipped") refers to the incorporation of a gas into a food material. For purposes herein, the gas is not particularly limited, and may be air, nitrogen, carbon dioxide, and gas combinations thereof. The gas can be added or can be the resultant of the manufacturing process. Preferentially, according to the disclosure, the gas consists the air resulting from the "flash evaporation", meaning the process by which some of a liquid, here water of the dough, instantly boils - or flashes - after it has been heated and sent through a chamber that has reduced pressure. It is the reduction in pressure between the interior of the extruder and atmospheric pressure at the outlet that results in some of the liquid vaporizing. This phenomenon creates numerous small air cavities in the kibble. Aerated means an expanded kibble with numerous air bubbles internally, we measure the internal "aeration" (the texture itself) by measuring the porosity (described above). The global volume that may be taken by the kibbles in the bowl (bringing what we call "full-bowl effect") is measured by measuring the bulk density (described above): due to the internal aeration (more air bubbles, higher porosity) and the specific shape (the hole in the middle = "air" too), the bulk density is lower, the kibble is considered as light.

As used herein, the terms "animal" or "pet" mean a domestic animal including, but not limited to domestic dogs, cats, horses, cows, ferrets, rabbits, pigs, rats, mice, gerbils, hamsters, horses, and the like. Domestic dogs and cats are particular examples of pets.

As used herein, the terms "animal feed", "animal feed compositions", "animal feed kibble", "pet food", or "pet food composition" all mean a composition intended for ingestion by a pet. Pet foods may include, without limitation, nutritionally balanced compositions suitable for daily feed, such as kibbles, as well as supplements and/or treats, which may or may not be nutritionally balanced.

The expression "caloric density" with respect to a composition of the disclosure, such as a kibble, intends to refer the amount of calorie per liter of food composition. The caloric density of a food composition of the disclosure may be measured according to any methods known in the art. The caloric density may be calculated by multiplying the volume density expressed in kg/L by the energy of the product (in kcal/kg). The unit is kcal/L.

The terms "include", "has" or "comprise" is to be interpreted as specifying the presence of the stated features, integers, steps or components, but not precluding the presence of one or more other features, integers, steps or components, or group thereof. Also, it may specify strictly the stated features, integers, steps or components, and therefore in such case it may be replaced with "consist".

As used herein, the term "coating" means a partial or complete covering, typically on a core, that covers at least a portion of a surface, for example a surface of a core. In one example, a core may be partially covered with a coating such that only part of the core is covered, and part of the core is not covered and is thus exposed. In another example, the core may be completely covered with a coating such that the entire core is covered and thus not exposed. Therefore, a coating may cover from a negligible amount up to the entire surface. A coating can also be coated onto other coatings such that a layering of coatings can be present. For example, a core can be completed coated with coating A, and coating A can be completely coated with coating B, such that coating A and coating B each form a layer.

As used herein, the term "core", or "core matrix", means the particulate pellet of a kibble and is typically formed from a core matrix of ingredients and has a moisture, or water, content of less than 12% by weight. The particulate pellet may be coated to form a coating on a core, which may be a coated kibble. The core may be without a coating or may be with a partial coating. In an embodiment without a coating, the particulate pellet may include the entire kibble. Cores can include proteinaceous material, fibers materials, starches, and mixtures and combinations thereof. In one embodiment, the core can include a core matrix of protein, fibers, and starches.

The expression "dry food composition" or "dry food" usually relate to a food or a composition with about 20% or less than about 20% of moisture content, relative to the total weight of the composition/food, preferably of about 14% or less than about 14% of moisture content, relative to the total weight of the composition. In general, such dry food or dry composition may even contain much less than about 14% of moisture content, relative to the total weight of the composition, such as from about 1 to about 14% of moisture content. Although this definition is not limited to one specific form of presentation, a dry food or dry composition is generally presented in the form of (biscuit-like) kibbles, and/or dry core components. For instance, dry compositions may be manufactured by mixing together ingredients and kneading in order to make consistent dough that can be cooked. The process of creating a dry pet food is usually done by baking and/or extruding. The dough is typically fed into a machine called an expander and/or extruder, which uses pressurized steam or hot water to cook the ingredients. While inside the extruder, the dough is under extreme pressure and high temperatures. The dough is then pushed through a die (specifically sized and shaped hole) and then cut off using a knife. The puffed dough pieces are made into a dry product, such as a kibble, by passing it through a dryer so that moisture is dropped down to a defined target ensuring stability of the food until consumption. The product/kibble can then be coated with fats, oils, minerals, vitamins, natural extracts cocktail, flavors and optionally sealed into packages.

The analysis of the water content of a food composition, in particular of a dry food composition such as a kibble, can be performed on the basis of a simple three-steps method well known by the man skilled in the art. This method includes the weighing of the sample to be analyzed, followed by the desiccation of said sample in an oven, and finally the weighing of the sample after its desiccation. A sample according to the present disclosure is an individual kibble. Various ISO standard have been published detailing the requirements, specifications, guidelines or characteristics that can be used for the determination of moisture in animal feeding stuffs (see for example the ISO standard 6496:1999, incorporated herein by reference).

With respect to a composition of the disclosure, in particular a kibble, the term "empty cavity" is used to refer to an empty space contained in the composition and defining a substantial amount of the volume of the composition, at least about 20%. An empty cavity is therefore distinct from a pore or a series of pore by its size and configuration. An empty cavity necessarily includes one or more aperture(s) allowing communication between the inside of the cavity and the outside. The inside of an empty cavity is the inside of the composition. The outside of the empty cavity is the outside of the composition. An empty cavity therefore defines a hole in the substance of the composition.

By "expanded product" in the sense of the present disclosure, this means an alveolate product, of which the air cells filled with air represent at least about 40%, preferably at least about 50% of the volume of the product, if necessary at least about 65% of the volume, or at least about 80% of the volume, and even up to about 85% relative to the volume of the composition. This expanded structure gives the product according to the disclosure a crunchy character which the consumer likes, which can be quantified, if needed, in particular by measuring the breaking force (expressed in N).

As used herein, the term "extrude" means an animal feed that has been processed by, such as by being sent through, an extruder. In one embodiment of extrusion, kibbles are formed by an extrusion processes wherein raw materials, including starch, can be extruded under heat and pressure to form the pelletized kibble form, which can be a core. Any type of extruder can be used, non-limiting examples of which include single screw extruders and twin-screw extruders.

Within the disclosure, the expression "high-volume aerated" with respect to a composition of the disclosure, such as a kibble, intends to refer to a composition having a porous matrix. Such a composition has a porosity ranging from about 40% to about 85%, preferably from about 40% to about 70%, preferentially from about 49% to about 68% relative to the total volume of the composition.

We measure also the global volume that take the kibbles in the bowl (bringing what we call "full-bowl effect") by measuring the bulk density (described above): due to the internal aeration (more air bubbles, higher porosity) and the specific shape (the hole in the middle = "air" too), the bulk density is lower, the kibble is considered as light.

As used herein, the term "kibble" includes a particulate pellet like component of animal feeds, such as dog and cat feeds, typically having a moisture, or water, content of less than about 20% by weight, relative to the total weight of the kibble. Kibbles may range in texture from hard to soft. Kibbles may range in internal structure from expanded to dense. Kibbles may be formed by an extrusion process. For instance, a kibble can be formed from a core and a coating to form a kibble that is coated, also called a coated kibble. It should be understood that when the term "kibble" is used, it can refer to an uncoated kibble or a coated kibble.

Within the disclosure, the expression "low-caloric density food composition" intends to refer to a composition the caloric density of which is from about 500 kCal/L to about 900 kCal/L.

Within the disclosure, the expression "low-density food composition" intends to refer to a composition the volume density of which is below about 300 g/L, and preferably is not more than about 270 g/L. Low-density and low-volume density are used interchangeably.

As used herein, the term "macronutrient" means a source, or sources, of protein, fibers, starches, fat, carbohydrate, and/or combinations and/or mixtures thereof.

As used herein, the term "nutritionally balanced" means that the composition, such as pet food, has known required nutrients to sustain life in proper amounts and proportion based on recommendations of recognized authorities, including governmental agencies, such as, but not limited to, Unites States Food and Drug Administration's Center for Veterinarian Medicine, the American Feed Control Officials Incorporated, in the field of pet nutrition, except for the additional need for water.

Within the disclosure, the term "open area" intends to refer to the surface through which the dough passes at the outlet of the extruder, expressed in mm²/T/h (and not in mm²/T). It is calculated by dividing the total area of outlet (the area of one die multiplied by the number of dies, in mm²) by the pre-conditioner flow rate (in T/h).

Within the disclosure, the terms "porous" or "porosity" with respect to a composition of the disclosure, such as a kibble, intends to refer to a measure of the void (i.e. "empty") spaces in the composition. It is expressed as a fraction of a fraction of the volume of voids over the total volume, between 0 and 1, or as a percentage between 0% and 100% of the total volume of the composition. The porosity of a composition of the disclosure may be measured according to any methods known in the art. The porosity may be measured by X-ray. The porosity is the measure of the void (i.e. "empty") spaces in the kibble, expressed as a fraction of the volume of voids over the total volume of the kibble (as a percentage).

As used herein, the term "preventing" or "prevent" used in conjunction with an event intends to mean reducing or to reduce the risk or likelihood of occurrence of said event. The term "prevent" does not require the 100% elimination of the possibility or likelihood of occurrence of the event. Rather, it denotes that the likelihood of the occurrence of the event has been reduced in the presence of the food composition or method as described herein. For instance, with respect to "overweight" or "obesity" the terms "prevent" or "preventing" intend to refer to reducing or to reduce the risk or likelihood of occurrence of overweight or obesity, or associated symptoms.

Within the disclosure, the term "significantly" used with respect to change intends to mean that the observe change is noticeable and/or it has a statistic meaning.

Within the disclosure, the term "substantially" used in conjunction with a feature of the disclosure intends to define a set of embodiments related to this feature which are largely but not wholly similar to this feature. For instance, "substantially circular cross-section" intends to refer to strict circular cross-circular sections but also to cross-circular sections which are not exactly circular, but which not depart significantly from the circular aspect. Such cross-sections can be qualified as grossly circular.

The terms "treat" or "treatment" or "therapy" in the present text refers to the administration or consumption of a composition according to the disclosure with the purpose to cure, heal, alleviate, relieve, alter, remedy, ameliorate, improve, or affect a disorder according to the disclosure, the symptoms of the condition, or to prevent or delay the onset of the symptoms, complications, or otherwise arrest or inhibit further development of the disorder in a statistically significant manner.

Within the disclosure, the terms "volume density" or "bulk density" are used interchangeably and are intended to refer to the degree of compactness of a substance. The density of a food composition of the disclosure may be measured according to any methods known in the art. As example of suitable method, where the volume density is measured using a 10-liters pot filled by the kibbles and then weighed, it is so expressed in g/L.

The following method can be used to determine the density of a dry food composition (kibble) according to the disclosure. Clean and level a calibrated scale with 1-gram or better resolution. Tare the scale using a clean, dry, calibrated 10-Liter cup (10-L). Position a funnel having a minimum diameter sufficient to allow the kibble to be tested to flow freely, and a maximum diameter at the same point to channel kibble into the 10-L cup or vessel, approximately 2 inches above the top of the 10-L cup with the bottom (outlet) of the funnel blocked. Gently fill the funnel with slightly more than 10-L of kibble to be tested. With the 10-L cup under the funnel, unblock the funnel and allow the kibble to flow into the 10-L cup. Using a straight-edge (such as a ruler or strike stick), remove excess kibble by sliding the straight-edge smoothly across the top of the 10-L cup. The kibble should not be level with the rim of the 10-L cup. Place the 10-L cup on the tared scale and record the results. The density is the scale reading (in grams) divided by 10-L. The measurement has to be repeated to calculate an average.

The list of sources, ingredients, and components as described hereinafter are listed such that combinations and mixtures thereof are also contemplated and within the scope herein.

It should be understood that every maximum numerical limitation given throughout this specification includes every lower numerical limitation, as if such lower numerical limitations were expressly written herein. Every minimum numerical limitation given throughout this specification will include every higher numerical limitation, as if such higher numerical limitations were expressly written herein. Every numerical range given throughout this specification will include every narrower numerical range that falls within such broader numerical range, as if such narrower numerical ranges were all expressly written herein.

All lists of items, such as, for example, lists of ingredients, are intended to and should be interpreted as Markush groups. Thus, all lists can be read and interpreted as items "selected from the group consisting of" ... list of items ... "and combinations and mixtures thereof."

Referenced herein may be trade names for components including various ingredients utilized in the present disclosure. The inventors herein do not intend to be limited by materials under any particular trade name. Equivalent materials (e.g., those obtained from a different source under a different name or reference number) to those referenced by trade name may be substituted and utilized in the descriptions herein.

In the description of the various embodiments of the present disclosure, various embodiments or individual features are disclosed. As will be apparent to the ordinarily skilled practitioner, all combinations of such embodiments and features are possible and can result in preferred executions of the present disclosure. While various embodiments and individual features of the present disclosure have been illustrated and described, various other changes and modifications can be made without departing from the spirit and scope of the disclosure. As will also be apparent, all combinations of the embodiments and features taught in the foregoing disclosure are possible and can result in preferred executions of the disclosure.

### Compositions

In some embodiments, a dry food composition of the disclosure is an expanded food composition.

In some embodiments, a dry food composition of the disclosure is a low-caloric density food composition.

In yet other embodiments, a dry food composition of the disclosure is a low-volume density food composition.

In still yet other embodiments, a low-caloric density composition of the disclosure is a low-volume density composition.

In some aspects, a food composition of the disclosure includes a porous matrix. The porous matrix of a composition provides a high surface area per. This is accomplished by way of the low volume density porous matrix comprising a skeletal structure that defines pores that are uniformly or randomly sized and dispersed throughout the porous matrix and its surface as a plurality of intercommunicated pores.

A dry food composition may have a porosity ranging from about 49% to about 68%, preferentially from about 45% to about 65%, and more preferably from about 55% to about 65% relative to the total volume of the composition.
the dry food composition of the disclosure have a caloric density ranging from 530 kCal/L to about 800 kCal/L, and more preferably from about 550 kCal/L to about 770 kCal/L.

A low-volume density composition may have a volume density below 300 g/L, and preferably below 270 g/L. In embodiments, a low-density dry food composition of the disclosure may have a volume density ranging from about 150 g/L to about 300 g/L, more preferably from about 160 g/L to about 270 g/L, and more preferably from about 180 g/L to about 250 g/L, and more preferably from about 190 g/L to about 240 g/L.

A low-caloric density and low-volume density food composition of the disclosure is obtained thanks to a combination of specific ingredients, in specific range of amounts, of porosity, and shape.

According to embodiments, a food composition of the disclosure is a low-volume density, low-caloric density, aerated or expanded food composition. Preferably, it is a low-volume density, low-caloric density, high volume aerated food composition. More preferably, a food composition of the disclosure is a low-volume density, low-caloric density kibble. Preferably, it is a low-volume density, low-caloric density, aerated kibble. Preferably, it is a low-volume density, low-caloric density, high volume aerated kibble.

An expanded food composition of the disclosure may be any three-dimensional shape, e.g., sphere or sphere-like, ellipsoidal (having up to 3 or more diameters), cylinder-like, disk-like, or any other 3-dimensional geometric shape. Preferably, a food composition of the disclosure is cylinder-like.

A food composition of the disclosure has an empty cavity. The size or volume of this cavity may be at least about 20% and up to about 70%, preferentially between about 30% and about 60% and more preferentially between about 40% to about 50% of the total volume of the composition.

A dry food composition of the disclosure is composed of kibbles.. Each kibble defines a total volume and includes, within the total volume, at least one empty cavity comprising at least one aperture. The cavity represents a volume of at least 20%, preferably at least 25% of the total volume.

In one embodiment, the empty cavity of a kibble of the disclosure may represent a volume of about 20% to about 70%, preferentially about 25% to about 65%, and preferably represents about 30% to about 60%, and more preferably represents about 40% to about 50% of the total volume of said kibble.

The empty cavity is approximately positioned around the center of the volume constituted by the kibble of the disclosure.

The empty cavity may include at least two apertures, and preferably may include no more than two apertures.

The kibbles have a cylinder-like shape with a central hole, or empty cavity, with two opening at each extremity of said cylinder. The hole may represent a volume of about 20% to about 70% of the total volume of each kibble.

The kibbles are cylinder-like kibbles having central or substantially central cylinder-like empty cavity, or hole.

Because the kibbles of a food composition of the disclosure may have a central empty cavity approximately positioned around the center of the volume constituted by the piece or element, it is possible to characterize those kibbles with an external diameter and an internal diameter. Because a kibble includes an empty cavity approximately positioned around the center of the volume constituted by the kibble, the starting points of the dimensions taken for the internal and external diameters are approximately at the center of the empty cavity.

An external diameter represents a dimension starting from the center or approximately the center of the kibble and extending up to periphery of the kibble.

An internal diameter represents a dimension starting from the center or approximately the center of the kibble and extending up to the internal wall of the empty cavity.

The kibbles have an external diameter and an internal diameter, said external diameter is ranging from about 8 mm to about 25 mm, preferably from about 10 mm to about 20 mm, and more preferably from about 11 mm to about 18 mm, and said internal diameter is ranging from about 2 mm to about 15 mm, preferably from about 2 mm to about 12 mm.

The kibbles of a composition of the disclosure may have a ratio of external diameter:internal diameter ranging from about 1.5 to about 4.0, preferably from about 2.0 to about 3.8 and more preferably of about 2.1 to about 3.6.

In one embodiment, the kibbles have a longitudinal dimension ranging from about 5 mm to about 22 mm, preferably from about 7 mm to about 18 mm, and more preferably from about 9 mm to about 16 mm. The kibbles of a composition of the disclosure may have a ratio of width over length (or external diameter:height) ranging from about 1.0 to about 1.5, preferably from about 1.1 to about 1.3 and more preferably of about 1.2.

As indicated above, the kibbles of a composition of the disclosure and the empty cavity contained herein may be of any shape. The shape of cross-section of the empty cavity may be similar or substantially similar to the shape of the cross-section of the kibbles. Preferably, the empty cavity may have a circular or oval cross-sectional shape or a substantially circular or oval cross-section shape. The cavity may have at least two apertures. Preferably, the cavity has no more than two apertures. The aperture may be of any shape. Preferably, the aperture may have a shape similar or substantially similar to the shape of the cross-section of the kibbles constituting the composition. Preferably, the aperture may have a circular or oval cross-sectional shape or a substantially circular or oval cross-section shape.

The size of the expanded food composition is such that a pet can easily masticate and swallow it. The size of a food composition of the disclosure can be larger or smaller than the non-limiting example by modifying any one or more of the extruder orifice(s), extrusion temperature and pressure conditions, and the amount of moisture in the extrudate.

The composition of the disclosure is a dried composition. A dry composition may include preferably equal or less than about 20%, preferably equal or less than 15%, preferably equal or less than 12%, preferably equal or less than 10%,preferably to a range from about 3% to about 10 %, more preferably from about 4% to about 9%, and more preferably from about 5% to about 8.5% of water by weight relative to the total weight of the composition.

The analysis of moisture or water content may be made according to any know methods in the art. For example, the analysis may be made with the following 3 stages method: 1. weighing of the sample to be analyzed, 2. oven desiccation at 103°C ± 2°C during 4h ± 5min, 3. weighing of the sample after desiccation.

In embodiments, a food composition of the disclosure may be a nutritionally complete food or a functional complement. A complete food is a nutritionally adequate feed for animals, that can be fed as a sole ration and is capable of sustaining life without additional food (aside from water).

A functional complement may include functional ingredients for a dedicated specific effect for the animal. Various functional ingredients may be included. The functional ingredients may include a vitamin, a mineral, conjugated linoleic acid, an antioxidant, a microorganism, illustratively a probiotic, a moiety such as a metabolite or a supernatant of culture of such microorganism, an extract from a plant that may contain any of the above, a dietary supplement, or combinations and mixtures of the above. Illustratively, the functional ingredient, or mixture thereof, is selected for its properties in a weight management diet.

Further to the other numerous advantages of the compositions of the disclosure as previously described and as shown in the example, the inventors have surprisingly observed an improved resistance to breakage of the compositions of the disclosure. This improved resistance is surprising as the aerated structure (porosity) and the presence of an empty cavity of a volume of at least 20% could have led to a reduced resistance as compared to conventionally manufactured or conventionally formulated compositions.

Resistance to breakage may be measured by any known methods in the art. A well-adapted method is the measure of the amount of broken kibbles relative to the total amount of kibbles in a pack after packing.

Compared to conventionally manufactured and/or conventionally formulated compositions, compositions of the disclosure have a breakage rate equal or less than about 7%, preferably equal or less than about 6%, preferably equal or less than about 5%, preferably equal or less than about 4%, preferably equal or less than about 3%, preferably equal or less than about 2%, preferably equal or less than about 1% and most preferably ranging from about 0.5 to about 0.7%. relative to the total amount of packed compositions or kibbles.

The resistance to breakage of the compositions of the disclosure allows for an improved durability and storage, and an easier handling.

Further because of this resistance to breakage, the food compositions of the disclosure maintain an appetizing aspect, and further maintain large dimensions of the kibbles allowing to maintain the advantages of high-volume effect and low-volume density.

### Proteins

A food composition according to the present disclosure may contain one or more distinct source(s) of proteins. Generally, a pet food composition as described herein includes a plurality of sources of proteins.

The low-density dry food composition includes protein in an amount ranging from about 20% to about 36% by weight relative to the total weight of the composition.

The protein content of a composition of the disclosure shall be high so as to ensure maintenance of lean body mass. In some embodiments, a composition according of the disclosure may include proteins, hydrolysed or non-hydrolysed, an amount ranging from about 20% to about 36% by weight of protein relative to the total weight of the composition.

As used herein, a protein content ranging from about 20% to about 36% by weight includes a protein content of 21%, 22%, 23%, 24%, 25%, 26%, 27%, 28%, 29%, 30%, 31%, 32%, 33%, 34%, 35%, by weight relative to the total weight of the composition.

In one embodiment, a food composition designed for dogs may preferably include proteins in an amount ranging from about 25 to about 30%, and more preferably from about 26 to about 28% by weight relative to the total weight of the composition.

In one embodiment, a food composition designed for cats may preferably include proteins in an amount ranging from about 30 to about 35%, and more preferably from about 32 to about 35% by weight relative to the total weight of the composition.

Proteins which are suitable for the compositions of the disclosure may be vegetal or animal proteins. Preferably vegetal proteins are used.

As animal proteins, one may select animal proteins from poultry, beef, chicken, chicken meal, lamb, lamb meal, dried egg, fish, fish meal, meat and bone meal, meat byproducts, meat meal, turkey, blood plasma, insects, or bone marrow. Preferred animal proteins are poultry.

As vegetal proteins, one may select vegetal proteins from soybean, chickpea, pea, corn gluten, rice, lentils, or barley. Preferred vegetal proteins are soy or corn gluten, and preferably soy protein.

In one embodiment, a composition of the disclosure does not include proteins from wheat gluten, dried egg, beef and pea protein.

A composition of the disclosure may include animal and vegetal proteins in a ratio animal/vegetal ranging from about 1:4 to about 3:1, preferably from about 1:3 to about 2:1, and preferably from about 1:2 to about 1:1.

According to embodiments, the proteins may be hydrolyzed proteins. Hydrolyzed proteins may be partially or totally hydrolyzed. Partially hydrolyzed proteins may contain at least about 95% of hydrolyzed proteins, preferably at least about 98%, and more preferably at least about 99% of hydrolyzed proteins.

In embodiments, hydrolyzed proteins are used. Preferably, hydrolyzed vegetal proteins are used. In a preferred embodiment, hydrolysed proteins are the only source of proteins in a composition of the disclosure.

According to embodiments, a composition of the disclosure may include as only source of proteins, partially or totally hydrolyzed vegetal proteins, and preferably totally hydrolyzed vegetal proteins.

Methods to hydrolyze, partially or totally proteins are well-known. A hydrolysate can be produced by any known chemical or enzymatic method, such as, in non-limiting example, methods disclosed in US 5,589,357, US 4,879,131, US 5,039,532 or EP 1 236 405 B1 (incorporated herein by reference).

In some embodiments, the at least partially hydrolysed proteins have a molecular weight ranging from about 1,000 Da to about 11,000 Da.

As used herein, ranging from about 1,000 Da to about 11,000 Da includes 1,250 Da, 1,500 Da, 1,750 Da, 2,000 Da, 2,250 Da, 2,500 Da, 2,750 Da, 3,000 Da, 3,250 Da, 3,500 Da, 3,750 Da, 4,000 Da, 4,250 Da, 4,500 Da, 4,750 Da, 5,000 Da, 5,250 Da, 5,500 Da, 5,750 Da, 6,000 Da, 6,250 Da, 6,500 Da, 6,750 Da, 7,000 Da, 7,250 Da, 7,500 Da, 7,750 Da, 8,000 Da, 8,250 Da, 8,500 Da, 8,750 Da, 9,000 Da, 9,250 Da, 9,500 Da, 9,750 Da, 10,000 Da, 10,250 Da, 10,500 Da, 10,750 Da.

In some embodiments, the at least partially hydrolysed proteins have a molecular weight ranging from about 2,000 Da to about 5,000 Da.

### Fibers

A food composition according to the present disclosure may contain one or more distinct source(s) of fibers and type of fibers. Generally, a pet food composition as described herein includes a plurality of sources of fibers.

The low-density dry food composition includes total dietary fibers in an amount ranging from about from about 15% to about 30% by weight relative to the total weight of the composition.

The total dietary fibers (TDF) are the remnants of edible plant cell wall polysaccharides, lignin, and associated substances resistant to hydrolysis by human alimentary tract enzymes. As used herein, the dietary fiber represents the indigestible part of plant foods. The official definition of TDF was published by Trowell H, Southgate DA, Wolever TM, Leeds AR, Gassull MA, Jenkins DJ. Letter: Dietary fibre redefined. Lancet. 1976;1(7966):967. doi:10.1016/s0140-6736(76)92750-1 (incorporated herein by reference).

TDF can be analyzed according to the method described by Prosky L, Asp NG, Furda I, De Vries JW, Schweizer TF, Harland BF. Determination of total dietary fiber in foods and food products: collaborative study. J Assoc Off Anal Chem. 1985;68(4):677-679 (incorporated herein by reference).

The most common dietary fibers are lignin, cellulose, hemicellulose, pectin, gums, and resistant starches (also referred to as beta-glucans).

Illustratively, a source of dietary fiber suitable for implementing a composition according to the instant disclosure includes rice hulls, corn and corn by-products, soybean hulls, beet pulp, dried potato product, cellulose, bran, peanut hulls, pectin and a mixture thereof.

As used herein total dietary fibers include soluble fibers (also referred as fermentable fibers) and insoluble fibers (also referred as non-fermentable fibers). Soluble fibers can be defined as being resistant to digestion and absorption in the small intestine and undergo complete or partial fermentation in the large intestine. Insoluble fibers can be defined as non-starch polysaccharides that are resistant to digestion and absorption in the small intestine, and resistant to fermentation in the large intestine.

In practice, a suitable source of soluble fibers, for the purpose of the instant disclosure, may be selected from beet pulp, guar gum, chicory pulp, chicory root, psyllium, pectin, blueberry, cranberry, squash, apples, oats, beans, citrus, barley, and peas.

Illustratively, a suitable source of insoluble fibers, for the purpose of the instant disclosure, may be selected from cellulose, whole wheat products, wheat oat, corn bran, flax seed, grapes, celery, green beans, cauliflower, potato skins, fruit skins, vegetable skins, peanut hulls, and soy fiber.

The total dietary fibers content of the composition according to the instant disclosure shall be high so as to help reducing the energy density of the diet and promote satiety in pets undergoing a weight loss program, or a weight stabilization program.

The composition according to the invention includes an amount ranging from about 15% by weight to about 30% by weight of total dietary fibers, based on the total weight of the composition, preferably from about 15% to about 28%, and more preferably from about 20% to about 28% by weight relative to the total weight of the composition.

As used herein, from about 15% by weight to about 30% by weight of total dietary fibers includes 16%, 17%, 18%, 19%, 20%, 21%, 22%, 23%, 24%, 25%, 26%, 27%, 28%, and 29% by weight of total dietary fibers, based on the total weight of the composition.

In some embodiments, a composition according to the instant disclosure includes an amount ranging from about 22% by weight to about 30% by weight of total dietary fibers, based on the total weight of the composition.

In some embodiments, a composition according to the instant disclosure includes an amount ranging from about 1% by weight to about 10% by weight of soluble fibers, based on the total weight of the composition, preferably from about 1% to about 7%, and more preferably from about 1% to about 4% by weight relative to the total weight of the composition.

In some embodiments, a composition according to the instant disclosure includes an amount ranging from about 15% by weight to about 28% by weight of insoluble fibers, based on the total weight of the composition, preferably from about 18% to about 25%, and more preferably from about 20% to about 25% by weight relative to the total weight of the composition.

Within the scope of the instant disclosure, the expression "crude fiber" (CFIB) is intended to refer to one type of dietary fiber, the type that remains as residue after food receives a standardized laboratory treatment with dilute acid and alkali. The treatment dissolves all the soluble fiber and some of the insoluble fiber in a food. The residue or crude fiber is primarily composed of cellulose and lignin. CFIB may be analyzed according to the method described by Henneberg, Wilhelm and Friedrich Stohmann, Beitrage Zur Begrundung einer RationelIen Futterung Der Wiederkauer, Vol. I, II, Schwetschke U. Sohn, Brunswick, 1860, 1865 (incorporated herein by reference).

In some embodiments, a composition according to the instant disclosure includes an amount ranging from about 6% by weight to about 18% by weight of crude fibers, based on the total weight of the composition, preferably from about 8% to about 16% of crude fibers, based on the total weight of the composition.

As used herein, from about 6% by weight to about 18% by weight of crude fibers includes 7%, 8%, 9%, 10%, 11%, 12%, 13%, 14%, 15%, 16%, and 17% by weight.

### Carbohydrates or NFE

As used herein, and as conventionally admitted in the art, the Nitrogen Free Extract (NFE) consists of the soluble carbohydrate fraction that is present in a food composition disclosed herein.

NFE encompasses soluble polysaccharides, starch, gums, mucilages and pectin, if present in the said food composition.

Thus, as it is conventionally admitted in the art, NFE does not include the insoluble carbohydrate fraction within the crude fiber material that may, in some embodiments, be present in the said food composition.

Typically, the content of a food composition in Nitrogen Free Extract is determined by subtracting the content of each of the other components (protein, fat, crude fiber, ash) from the whole dry matter of the said food composition.

NFE, or carbohydrates, may be supplied under any suitable source(s), as known in the art. A suitable source of NFE may be selected from oat fiber, cellulose, peanut hulls, beet pulp, parboiled rice, corn starch, corn gluten meal, and any combination of those sources. Grains supplying carbohydrate include, but are not limited to, wheat, corn, barley, and rice.

In some embodiments, the NFE content in a composition according to the instant disclosure ranges from about 28% by weight to about 50% by weight, in particular from about 30% by weight to about 45% by weight, preferably from about 32% by weight to about 37% by weight based on the total weight of dry matter of the composition.

As used herein, from about 28% by weight to about 50% by weight NFE includes 29%, 30%, 31%, 32%, 33%, 34%, 35%, 36%, 37%, 38%, 39%, 40%, 41%, 42%, 43%, 44%, 45%, 46%, 47%, 48%, and 49% by weight NFE, based on the total weight of dry matter of the composition.

### Starch

The product according to the invention further includes starch in an amount ranging from about 15% to about 32%, and preferably about 18% to about 28%, and preferably from about 20% to about 25% by weight of starch relative to the total weight of the composition.

Various types and sources of starch may be used, so long as the desired properties of the expanded food product are exhibited by the formulation used.

Whole grains, broken grains, flours, roots, and tubers can be used as sources for the starch used to manufacture the porous matrix. Examples of suitable starch sources include rice, brewer's rice, corn, barley, oats, wheat, potato, legumes, and/or other biopolymers. Pure or substantially pure starches may be used if desired. These and other sources of starch can be used to form the porous matrix. Selection of starches having known amylose and amylopectin content can be selected using conventional knowledge in the art. By way of example, waxy corn, rice, and sorghum starch are known to include almost about 100% amylopectin. Conversely, many high amylose starches, e.g., high amylose corn starches, include an amylose content of about 75% of more. Amylose and amylopectin proportions can be selected by using a starting material having starch in the selected proportion, by mixing various starches from various starting materials, or by supplementing starch from natural sources with modified starches such as acid-thinned starches, high amylopectin starches, or high amylose starches. Starch may contain other components such as moisture, protein, and fat.

According to one embodiment may be a natural starch. A natural starch is a non-modified starch. According to one embodiment may be a cereal starch. A preferred natural starch may be a non-modified cereal starch.

A starch suitable for the disclosure may be selected from starch, preferably cereal starch, having an amylose to amylopectin ratio which does not exceed about 30:70, preferentially not exceeding about 25:75, and still more preferentially not exceeding about 20:80, and more preferably being about 15:85.

According to embodiments, a composition of the disclosure may include a starch, preferably a non-modified or natural starch, from wheat, barley, wheat flour, corn flour, rice, potatoes, peas, or oat.

Preferred starch are starches, preferably a non-modified or natural, from barley, wheat flour, corn flour, or rice.

According to embodiments, a composition of the disclosure does not include high amylose starch or pregelatinized starch. A high amylose content starch has an amylose to amylopectin ratio of at least 40:60, and more preferably about 50:50.

According to embodiments, a composition of the disclosure does not include any starch from tapioca.

### Fat

In some embodiments, a composition according to the instant disclosure may include fat in an amount ranging from about 5% by weight to about 15% by weight of fat relative to the total weight of the composition, preferably from about 8% to about 12.5%, preferably from about 7% to about 12%, and preferably from about 7% to about 10% of fat relative to the total weight of the composition.

As used herein, from about 5% by weight to about 15% by weight of fat includes 6.0%, 6.5%, 7.0%, 7.5%, 8.0%, 8.5%, 9.0%, 9.5%, 10.0%, 10.5%, 11.0%, 11.5%, 12.0%, 12.5%, 13.0%, 13.5%, 14.0%, 14.5% by weight of fat, based on the total weight of dry matter of the composition.

As used herein, the expressions "fat", "crude fat", or "source of fat" are intended to refer to any food-acceptable fat and/or oil. The fat in accordance with the present disclosure may be indifferently in a fluid form and/or in a solid form. The composition according to the disclosure may include fat from animal origin and/or from vegetal origin. Fat can be supplied by any suitable source known by those skilled in the art.

A suitable plant fat source for the purpose of the instant disclosure may include, without limitation, wheat, sunflower, safflower, rapeseed, olive, borage, flaxseed, peanuts, blackcurrant seed, cottonseed, wheat, germ, corn germ as well as oils derived from these and other plant fat sources.

A suitable animal fat source for the purpose of the instant disclosure may include, for example and without limitation, meat, meat by-products such as chicken fat, turkey fat, beef fat, duck fat, pork fat, lamb fat, fish oil, seafood, dairy, eggs. The fat content of food compositions according to the instant disclosure may be determined by any method known in the art.

Illustratively, the crude fat content may include a source of linoleic acid, alpha-linoleic acid, arachidonic acid, omega-6 fatty acids, omega-3 fatty acids, eicosapentaenoic acid (EPA), docosahexaenoic acid (DHA) and a mixture thereof.

Within the purpose of the disclosure, the EPA/DHA content may improve the metabolic status and generate an anti-inflammatory effect. Preferentially, the food composition includes from about 0.05% to about 0.75% by weight of EPA/DHA, more preferentially from about 0.10% to about 0.50% by weight, based on the total weight of dry matter of the composition.

As used herein, from about 0.05% by weight to about 0.75% by weight of EPA/DHA includes 0.01%, 0.15%, 0.20%, 0.25%, 0.30%, 0.35%, 0.40%, 0.45%, 0.50%, 0.55%, 0.60%, 0.65%, 0.70%, by weight of EPA/DHA, based on the total weight of dry matter of the composition.

### Ash

In some embodiments, a composition according to the instant disclosure may include crude ash in an amount ranging from about 5% by weight to about 9% by weight of ash relative to the total weight of the composition, preferably from about 4% to about 8%, and preferably from about 4% to about 9% of ash relative to the total weight of the composition.

Within the scope of the instant disclosure, the ash is intended to refer to minerals, such as calcium, phosphorus, sodium, chloride, potassium and magnesium.

As used herein, from about 5% by weight to about 9% by weight of ash includes 5.5%, 6.0%, 6.5%, 7.0%, 7.5%, 8.0%, and 8.5% and 11.5% by weight of ash relative to the total weight of the composition.

### Other ingredients

A composition according to the instant disclosure may further include one or more trace element(s), in particular a trace element selected from iron, copper, manganese, zinc, iodine and selenium.

The composition according to the instant disclosure may further include one or more vitamin(s), in particular a vitamin selected from vitamin A, vitamin D, vitamin E, ascorbic acid, vitamin K, thiamine, riboflavin, pantothenic acid, niacin, pyridoxine, folic acid, biotin, vitamin B12 and choline.

In some embodiments, the food composition according to the present disclosure may further include a source of antioxidants.

As used herein, the expression "antioxidant" is intended to refer to a substance that is capable of reacting with free radicals and neutralizing them. Illustrative examples of such substances include, without limitation, carotenoids, including beta-carotene, lycopene and lutein, selenium, coenzyme Q10 (ubiquinone), tocotrienols, soy isoflavones, S-adenosylmethionine, glutathione, taurine, N-acetylcysteine, vitamin E, vitamin C, lipoic acid and L-carnitine.

In some embodiments, the food composition includes from about 1 % to about 4% by weight of arginine, based on the total weight of dry matter of the composition.

As used herein, from about 1% by weight to about 4% by weight of arginine includes 1.25%, 1.50%, 1.75%, 2.00%, 2.25%, 2.50%, 2.75%, 3.00%, 3.25%, 3.50%, 3.75% by weight of arginine, based on the total weight of dry matter of the composition.

In some embodiments, the composition further includes at least one flavour, in particular a natural flavour.

In some embodiments, the flavour is of protein origin.

### Manufacturing process

A food composition of the disclosure may be manufactured by a variety of processes. While the details of various manufacturing processes may differ and can be modified to reach the scope of desired end composition, the overall process involves the following steps:
1) preparing a dough in a preconditioner (or conditioner, here both terms are used interchangeably) under sufficient temperature, shear, and pressure conditions whereby the dough includes proteins, fibers, starch (ground at a granulometry below 1.2 mm), and water and any optional liquid additives and/or dry additives commingled with the proteins, fibers, starch, and water in the dough,
2) extruding the dough by (i) passing it through an orifice of a die(s) of an extruder chamber, under a first set of conditions (pressure, temperature, obturation of the orifice) to form an extrudate with one empty cavity comprising at least one aperture and then (ii) expanding the extrudate under a second set of conditions (pressure and temperature) to permit the rapid expansion of water vapor (steam) from moisture held within the dough and to form pores in the extrudate,
3) portioning the expanded extrudate by cutting it into pieces,
4) drying (at ambient air temperature or with a heating process) and/or cooling (with a cooling process) the pieces to a desired moisture content, preferably at least at or below 15% of water relative to the total weight of the composition of each piece,and
5) coating the pieces with additional flowable components such as fat, dry palatant(s), wet palatant(s), and/or aromas.

The preparation of the dough involves at least the steps of combining the ingredients, e.g., at least proteins, fibers, starch and water, used to create a mass of dough and then sufficiently heating the combination of ingredients, while mixing in an preconditioner in order to start to hydrate and cook the dough to get a sufficient pre-gelatinization of the starch. This portion of starch will go under pressure and higher temperature through the extruder, that will finalize the starch gelatinization.

A preconditioner begins the cooking process of raw materials prior to entering the extruder. A dough or the ingredients for a dough can be mixed in the pre-conditioner with steam and/or water under controlled conditions to pre-cook or pre-heat the dough, to mix all ingredients into the dough, and/or to prepare the dough (as by hydration) for the desired conditions during extrusion cooking. Additional liquids can be added here including oils/fats and color. Preconditioners can utilize high steam and water flow rates to begin the gelatinization process while hydrating and mixing the material.

What is believed to be important is that a sufficient portion of proteins, in particular hydrolyzed proteins and starch, e.g., from about 25 wt% to about 35 wt% of proteins and from about 15% to about 30% are combined to bind together to form the backbone structure of the porous matrix upon drying and/or cooling of the extrudate after it exits the orifice of die of the extruder and undergoes expansion due, in part, to vaporization moisture in the dough and drop in pressure.

Further, the processing conditions may impact the formation of the surface pores and of the cavity in the extrudate, said processing conditions may include extruder speed, extruder temperature in one or multiple heating zones, the amount of processing water blended with the batched ingredients, the amount of batched ingredients fed into the extruder, the amount of specific mechanical energy (SME) produced by the extruder per unit of product, and the temperature of the extrudate exiting the extruder (e.g., product exit temperature). The ingredients that make up the formulation can also impact the formation of the surface pores, said ingredients may include the choice of starch such as rice, corn, wheat, etc., the choice of proteins such vegetal or animal, hydrolyzed or non-hydrolyzed, the choice of fats such as poultry fat, tallow, white grease, etc., and the addition of water. The level of each ingredient may also be important in achieving the formation of the surface pores of the porous matrix.

To start the process, ingredient(s), e.g., proteins, fibers, starch and other optional dry additives and/or wet additives, such as, for example, preservatives (BHA), are combined with water and thoroughly mixed in a preconditioner to form a dough.

In an embodiment, the ingredients are, separately or combined as a composition, ground at least once by a mill (e.g., hammer mill or other milling equipment) to a desired size prior to combining with water. This operation may be made in grinder. Preferably, the ingredients are reduced to particles the size of them may be below 1.2 mm.

The ground ingredients are, separately or combined as a composition, fed at a predetermined feed rate into the conditioner (or pre-conditioner) by a dry material hopper or line. The water can be fed at a predetermined flow rate into the conditioner by a water or steam line. The feed rate and flow rate can be calibrated to reach a desired moisture of the dough under extrusion conditions and expanded porous matrix after extrusion.

The amount of water added to the ingredients is determined by the desired moisture content of the dough to be extruded and expanded. The water can be tap, filtered or other type of potable water. The target moisture level of the molten dough during extrusion can be up to about 30 wt% by weight relative to the weight of the dough.

The amount of water added into the conditioner may vary, for example, from about 3% to about 20% and preferably from about 5% to about 17% by weight relative to the weight of the dough.

The amount of steam water added into the conditioner may vary, for example, from about 2% to about 25% and preferably from about 4% to about 17% by weight relative to the weight of the dough.

The mixing rate in the conditioner may range for example from about 70 to about 90%, preferably may be about 80%.The apparatus(es) used to mix and heat the mixture of proteins, fibers, starch, water and other optional ingredients are not critical, and substantially any equipment capable of achieving such operations can be used. Equipment designed for performing mixing and heating operations on highly viscous materials can be used. By way of example, the dough can be prepared by mixing its components and heating the resulting mixture under pressure in any of a wide variety of conditioners that are available (e.g., Wenger).

In a non-limiting embodiment, the dough is heated in the conditioner at a temperature ranging from about 50 to about 110°C, preferably at about 60 to 100°C, and preferably at about 80 to about 95°C.

After the dough is prepared it is transferred into the chamber of an extruder. According to one embodiment, the conditioner and the extruder may be the same apparatus, and the preparation of the dough is made in the extruder chamber.

The dough from the preconditioning process discharges from the preconditioner and enters the extruder. Here, the dough is pushed through the extruder towards a die to form an extrudate and is further shaped by the die into kibbles. Dyes, oils, water, and steam can be added into the extruder during this stage. The extruder, such as but not limited to a single-screw extruder or a twin-screw extruder, applies high temperature, pressure, and shear to induce gelatinization of starch molecules.

An extruder that permits control of the materials passing therethrough is suitable for forming the extrudate. For example, a suitable extruder can be a twin-screw with high or low flight configuration to produce a sufficient amount of high to low shear (e.g., friction) during extrusion. A single screw extruder may also be used, or any device or combination of devices useful for mixing, heating, and forming the mixture into a molten dough, and then extruding the dough through a die or other orifice. Of course, other forms of extruder and screw configurations can be used, such as, for example, a ribbon blender.

During the passage of the dough within the extruder, additional water and steam can be added to obtain a suitable consistence allowing the dough to be pushed through the orifice of the die.

The amount of water added into the extruder may vary, for example, from about 0% to about 10%, preferably from about 0% to about 8% preferably from about 0% to about 5.5% by weight relative to the weight of the dough.

The amount of steam water added into the extruder may vary, for example, from about 0% to about 8% and preferably from about 1% to about 6.5%, and preferably may be from about 1.5% to about 4.5% by weight relative to the weight of the dough.

During extrusion, the mixture is mechanically sheared with an extruder under conditions of shear, pressure, and temperature to gelatinize the starch to the preferred amount by weight percentage. The extruder can be set at a temperature in the range from about 50°C to about 140°C or other suitable temperature to gelatinize starch. The processing temperature of the dough within the extruder can be higher due to the shear placed on the dough. The amount of specific mechanical work (SME) applied to the molten dough by the extruder must be sufficient to create a molten dough that can form a porous matrix with desired properties.

The amount of specific mechanical work (SME) applied to the dough by the extruder can be from about 15 kWh/t to about 80 kWh/t, preferably from about 25 kWh/t to about 70 kWh/t, preferably from about 35 kWh/t to about 65 kWh/t or other SME sufficient to create molten dough used to form a porous matrix with desired properties.

As used herein, Specific Mechanical Energy (SME) refers to the energy applied to the dough as it is forced through a die plate. SME can be adjusted inadvertently or indirectly to control for process speed or throughput. In certain embodiments, the SME can be increased by increasing the screw speed, or by modifying the screw itself, as by increasing the periodicity of the screw, or by decreasing the open area of the extruder's orifices, or by decreasing the flow rate through the extruder, or closing the Back Pressure Valve or decreasing the total added water content in the conditioner and/or in the extruder.

Preferably, the heat applied in the extruder may be sequentially increased so that when the dough is pushed in the extruder towards the orifice(s) of the die it is submitted to a series of incremental temperatures. A series of incremental temperature may include at least 2 steps, preferably at least 3 steps, preferably at least 4 and more preferably at least 5 steps. The first step of temperature is the temperature at which the dough is introduced into the extruder.

In a single-screw extruder, useful speed screws can range from about 350 rpm to about 600 rpm. Manipulating the SME can contribute to improved texture in at least two ways. First, a higher SME can help break up starch granules, allowing amylose to leach from the starch and amylopectin or other molecules from the starch granules to expand more or more rapidly. Second, a higher SME can help thoroughly mix and hydrate the dough in the final moments before it is forced through the die plate, facilitating starch gelatinization and preparing the dough to expand during extrusion. Thirdly, a higher SME can increase the flash-evaporation resulting in a better expansion.

When the conditioner (or pre-conditioner) and the extruder is the same apparatus and the preparation of the dough is made in the extruder chamber, the first step of temperature is temperature at which the dough has been prepared.

In one embodiment, a series of incremental temperature may include from 2 to 7, preferably from 3 to 6, preferably from 4 to 5, and preferably 5 steps of temperature.

A series of incremental temperature may start at about 50°C and end at about 140°C, preferably start at about 60°C and end at about 130°C. Between each temperature step, the temperature may be increased by about 10 to 40°C, preferably by about 15 to about 30°C, preferably by about 20°C.

The temperature of the molten dough that is under pressure in the extruder can exceed the boiling point of water present in the dough that is being extruded in order that vaporization of the water within the dough can be expected when the pressure applied to the molten dough in the extruder is released as the dough exits the extruder. The dough can be extruded at a predetermined extrusion rate.

Within the extruder, the dough may be conveyed by a screw or a plurality of screws, e.g. at least 2 screws or no more than 2 screw, at a rate adapted to increase the pressure within the dough to allow the extrudate to expand. As example, a processing rate within an extruder may be suitably obtained with a screw rate raging from about 300 to about 600 rpm, preferably ranging from about 400 to about 500 rpm.

The cooked dough is forced through shaped dies and cut, which causes the extrudate to expand due to temperature and pressure differences between extruder and the immediate external environment This drives more flash off *i.e.,* moisture loss in the form of steam caused by the difference between ambient temperature of the external environment and temperature of the extrudate.

From the extruder, the molten dough is forced through an orifice in a die plate, nozzle, or tubing to form a shaped extrudate at ambient air pressure. In one embodiment, the orifice is in a die plate. In another embodiment, the die plate may have at least one orifice, and preferably up to 5 or 6 orifices. The number of orifices is adjusted to maintain a sufficient pressure within the extruder chamber, and within the dough.

The orifice is configured to be partially obturated by an obturation portion to form at least one empty cavity comprising at least one aperture in the extrudate.

The orifice can be set depending upon the desired size and shape of the extrudate. For example, the orifice can be any shape such as rectangular, circular, square, triangular, elliptical, or other symmetric or asymmetric shape.

The obturation portion of the orifice can also be set depending upon the desired size and shape of the extrudate and of the cavity. For example, the obturation portion can be any shape such as rectangular, circular, square, triangular, elliptical, or other symmetric or asymmetric shape.

In one embodiment, the obturation portion is configured to increase pressure within said orifice of said extruder. The obturation portion may be positioned within any part of the orifice. Preferably, it is centrally or substantially centrally arranged within the orifice.

In one embodiment, the obturation portion is a pin.

The size of the orifice with the obturation portion can be any size sufficient to manufacture the porous matrix and a cavity.

In one embodiment, the obturation portion and the orifice are configured like an annular ring for extrusion of the dough. The annular ring will shape the extrudate into cylinder-like shape containing a cylinder-like cavity (or a cylinder-like hole).

According to one embodiment, the orifice has an open area ranging from about 130 mm²/T/h to about 300 mm²/T/h, preferably ranging from about 150 mm²/T/h to about 250 mm²/T/h, and preferably from about 160 mm²/T/h to about 230 mm²/T/h.

In a non-limiting embodiment, the total die orifice (or "the sum of the orifices") may have an area ranging from about 1000 mm² to about 3000 mm², preferably ranging from about 1100 mm² to about 2800 mm², and preferably from about 1200 mm² to about 2500 mm.

In a non-limiting embodiment, the total obturation portion (or "the sum of the obturation portions") may have an area ranging from about 50 mm² to about 2200 mm², preferably from about 100 mm² to about 1800 mm², and preferably from 150 mm² to 1600 mm².

In embodiments, when an orifice has a circular or substantially circular transversal cross-section it may have a diameter ranging from about 4 mm to about 15 mm, preferably from about 5.5 mm to about 14 mm.

In embodiments, when a pin has a circular or substantially circular transversal cross-section it may have a diameter ranging from about 1 mm to about 11 mm, preferably from about 1.5 mm to about 10 mm.

According to one embodiment, the orifice and the obturation portion may have a ratio of area orifice:obturation portion ranging from about 1 to about 10, preferably ranging from about 1.5 to about 9.0, and preferably ranging from about 2.0 to about 8.0.

An obturation portion or a pin is preferably arranged in an orifice of a die plate to maintain a certain empty space between an edge of the obturation portion or pin and an edge of the orifice to allow the dough to be extruded. The length of this space may range from about 1.6 mm to about 2.6 mm, and preferably is about 1.8 mm to about 2.4 mm, and preferably is about 2 mm.

In embodiments, when an orifice and a pin have each a circular or substantially circular transversal cross-section, they may have a ratio of orifice diameter:pin diameter ranging from about 1.0 to about 3.5, preferably from about 1.2 to about 3.0.

In another non-limiting embodiment, the method can further include a step of heating extrudate passing through the orifice of the extruder. The temperature at the orifice of the extruder is the outlet temperature. In one embodiment, this temperature may range from about 120°C to about 180°C, preferably from about 130°C to about 170°C, and preferably from about 140°C to about 155°C.

As the extrudate exits the extruder into ambient air and atmospheric conditions, the extrudate immediately and rapidly expands because of the sudden drop of pressure (from pressure within the extruder to the atmospheric pressure outside the extruder) and flash boiling of water vapor (steam) from the moisture held within the molten mass. This expansion of the extrudate forms the porous matrix comprising a plurality of pores within the skeletal structure of the porous matrix which may have some pores opening onto its surface. The level of vaporization can be controlled by maintaining sufficient temperature and pressure within the extruder, by venting gases prior to passage of the dough through the extruder's orifice, or a combination of these. As result of the flash, the moisture content of the dough can be about 30 wt% or less in its expanded form.

Thanks to the presence of the obturation portion, further to the pores, the expanded extrudate can be forced around the obturation portion to further include a cavity. The size, shape and position of the cavity within the extrudate will depend on the size, shape and position of the obturation portion in the orifice.

The cavity is open at one extremity of the extrudate. In one embodiment, the cavity may have a longitudinal aperture within the longitudinal wall of the extrudate.

Preferably, the obturation portion will be a pin centrally or substantially positioned within the orifice. The extrudate obtained in such configuration will be cylinder-like or tubelike with a cylinder-like cavity position centrally or substantially centrally within the extrudate.

After extrusion, the expanded extrudate can be portioned immediately after exiting the orifice of the extruder by a cutting device (e.g., knife, guillotine, rotary knives or the like) into 3-dimensional pieces of extrudate (e.g., pellets, kibbles, etc.) having a length, width, and height. For example, the length of a piece or element of a composition of the disclosure will be adjusted by adapting the rate of extrusion and the rate of cutting.

At this stage, the extruded product can be transferred to post-extrusion operations. These can include crimping, shredding, stamping, conveying, drying, cooling, and/or coating in any combination or multiple of process flow. Crimping is any process that pinches food together. Shredding is any process that reduces the size of the food upon extrusion, preferably by tearing. Stamping is any process that embosses a surface or cuts through a food. Conveying is used to transport food from one operation to another and may change or maintain the state of the food during transport; often this process is mechanical or pneumatic. Drying can be used to reduce process moisture, or water, to levels suitable for shelf-life in the finished product. As an expanded moist pellet, such as a kibble, the pellets can be transported from the extruder outlet to a dryer, such as a dryer oven, by a conveying, airveying, or auguring system.

After the extrudate is portioned into pieces, each piece may undergo a drying process that dehydrates the pieces to a desired moisture content. The drying process can involve exposing the pieces to heat in a heating device (e.g., oven, drum dryer, food dryer). The heat may include infrared radiation, microwave radiation, radio frequency radiation, direct hot air, direct flame, steam, an electric heat source, or other type of heat source. In a non-limiting embodiment, heat can be applied from about 80°C to about 100°C and for from about 1 minute to about 5 minutes.

Heating the pieces causes it to dry and harden and to even further expand, depending upon the amount, if any, of moisture trapped within the skeletal structure of the porous matrix

The heat can be applied to dehydrate the pieces to a final moisture content of preferably equal or less than about 20%, preferably equal or less than 15%, preferably equal or less than 12%, preferably equal or less than 10%, preferably to a range from about 3% to about 10 %, more preferably from about 4% to about 9%, and more preferably from about 5% to about 8.5% of water by weight relative to the total weight of the composition.

At these moisture levels, the volume density of the pieces or kibbles can be less than 300 g/L, and preferably from about from about 150 g/L to about 300 g/L.

The dried pieces of extrudate can be stored indefinitely in proper storage conditions or can be immediately moved to a process for vacuum infusion of flowable ingredients into the porous matrix and/or coating with flowable ingredients. Alternatively, the pieces can be dried by way of exposure to ambient air.

In the absence of heated drying, the pieces of extrudate can be exposed to a cooling process after reaching the desired volume density and moisture content. The cooling process is used to lower the post-extrusion temperature of the pieces of the extrudate to a desired temperature by passing the pieces of the extrudate through a cooling chamber. The cooled pieces of extrudate can also be stored indefinitely under proper storage conditions or can be transported to the vacuum infusion process to infuse and/or coat them with flowable ingredients.

In an even further embodiment, the pieces of extrudate can undergo a drying process (either heated or ambient air) and then a cooling process so that the pieces of extrudate can reach the desired volume density and temperature for the vacuum infusion and/or coating process or storage.

In a further embodiment, the pieces of extrudate can undergo a step of coating.

Coating can be performed to add carbohydrates, proteins, fats, water, vitamins, minerals, and other nutritional or health benefit ingredients to the food to make an intermediate or finished product.
Coating operations are well-known in the art. Coating operations may be conducted, for example, as described in WO 2011/091111 A1 (the content being herein incorporated by reference).

For example, the pieces of extrudate or core pellets can be fed to a fluidizing mixer for the application of a coating in the manufacture of a food pellet, such as a coated kibble. In one embodiment, the core pellets may be routed to a hopper prior to entering the fluidizing mixer. The coated kibble may be formed by contacting the core with a coating in a fluidizing mixer. In one embodiment, the fluidizing mixer can be a counter-rotating dual-axis paddle mixer, wherein the axes can be oriented horizontally with paddles attached to the counter-rotating axes. A suitable counter-rotating dual- axis paddle mixer may be obtained from Forberg International AS, Larvik, Norway; Eirich Machines, Inc, Gurnee, 111., USA, and Dynamic Air Inc., St. Paul, Minn., USA. The motion of the paddles in-between the shafts constitutes a converging flow zone, creating substantial fluidization of the particles in the center of the mixer. During operation of the mixer, the tilt of paddles on each shaft may create opposing convective flow fields in the axial directions generating an additional shear field in the converging flow zone. The downward trajectory of the paddles on the outside of the shafts constitutes a downward convective flow. In one embodiment, the fluidizing mixer can have a converging flow zone located in-between the counter-rotating paddle axes. In one aspect, the swept volumes of said counter-rotating paddle axes overlap within the converging flow zone. As used herein, the term "swept volume" means the volume that is intersected by a mixing tool attached to a rotating shaft during a full rotation of the shaft. In one aspect, the swept volumes of the counter-rotating paddle axes do not overlap within the converging flow zone. In one aspect, a gap can exist in the converging flow zone between the swept volumes of the counter-rotating paddle axes.

### Methods and uses of the compositions

The dry food composition or kibbles of the disclosure may be for use in the prevention and/or treatment of obesity or overweight in an animal in need thereof.

According to one embodiment, the disclosure relates to a use of a dry food composition or kibbles of the disclosure for decreasing the food intake of an animal.

The disclosure relates also to a dry food composition or kibbles of the disclosure suitable for decreasing the food intake of an animal.

According to one embodiment, the low-density dry food composition of the disclosure, the uses of the disclosure, or the methods of the disclosure are for animal which is a pet, preferentially a cat or a dog.

A dry food composition of the disclosure may be used as complete food or a complement.

A dry food composition of the disclosure may be used as a low-calorie diet. The food composition of the disclosure may be used as a "standard"/daily diet for overweight prevention.

Alternatively, a dry food composition of the disclosure may be used as a complement food for supporting a diet.

A dry food composition of the disclosure may be able to induce a high satietogenic effect on pets, preferably on small and medium dogs.

A dry food composition of the disclosure may also be used to reduce average voluntary intake per meal in pets.

A dry food composition of the disclosure may also be used to reduce meal ingestion speed in pets.

A dry food composition of the disclosure may reduce average voluntary intake per meal in pets, in particular in small and medium dogs, by at least about 10%, and preferably from about 10% to about 35%, and preferably from about 15% to about 30% compared to a non-expanded diet.

A dry food composition of the disclosure may reduce meal ingestion speed in pets, in particular in small and medium dogs, by at least about 20%, and preferably from about 30% to about 60%, and preferably from about 40% to about 55% compared to a non-expanded diet.

The following examples are provided for illustration purpose of the disclosure only. As will be apparent to the ordinarily skilled practitioner, all variations and combinations of such embodiments are possible without departing from the spirit of the disclosure.

In the following examples, reference is made to the following figures:

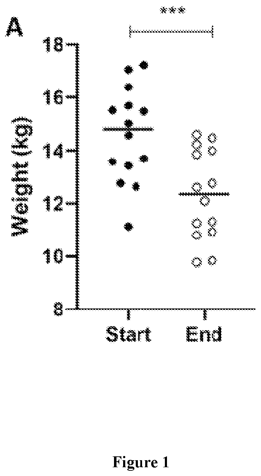

**Figure 1****:** Weight at the start and the end of the study.

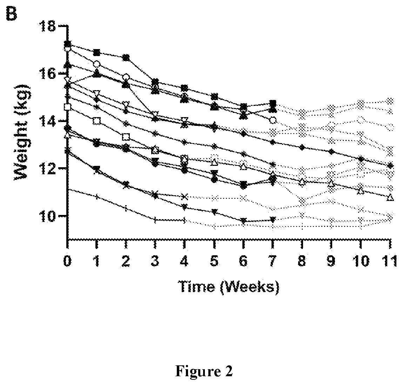

**Figure 2****:** Weight evolution for each dog fed with the composition according to the disclosure. Black lines correspond to the period wherein the dogs are feed with the Invention composition 2 and the grey lines correspond to the period after the dogs are feed with classic the low calories diet. Data are median (range). *** p<0.001 end vs start of study.

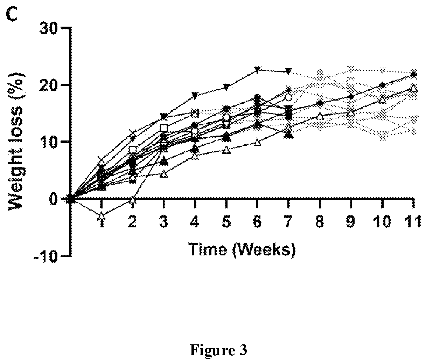

**Figure 3****:** Percentage of weight loss evolution for each dog fed with the composition according to the disclosure. Black lines correspond to the period wherein the dogs are feed with the Invention composition 2 and the grey lines correspond to the period after the dogs are feed with classic the low calories diet. Data are median (range). *** p<0.001 end vs start of study.

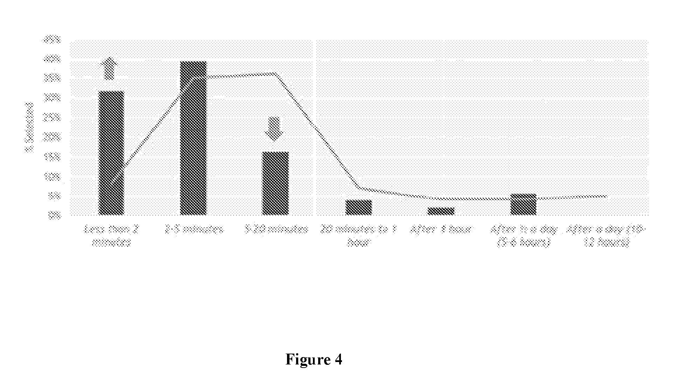

**Figure 4****:** Length of time taken to finish dry dog food. The black sticks in the Figure correspond to the results obtained with the current food used as a control whereas the grey line corresponds to the results obtained with the Invention 4 composition.

### Example 1

### Manufacturing process

Food compositions for dogs according to the disclosure (referred as "Invention") and comparative composition (referred as "Comparative") for dogs were prepared with the same general process, to the exception of the extrusion step where for the compositions of the disclosure each of the orifices of the extruder were partially obturated by a pin screwed within them. The applied parameters within the conditioner and the extruder are described in Table 1.

The parameters of this example are for a pilot scale. It is within the general knowledge of the person skilled in the art to adapt those parameters and translate the process to any industrial scale.

Formulations for Invention 1 and 2 and for Comparative 1 and 2 compositions are described in Table 7 of Example 4.

The dry ingredients were ground into a grinder to get particles below 1.2 mm. The ground ingredients were introduced in a conditioner and mixed with added water and steam to form a dough.

The dough was then transferred into an extruder and then heated under pressure. The heated dough was then pushed through a die plate to obtain an expanded extrudate which was then cut into kibbles.

The process according to the invention can be realized using any extruder available to the person skilled in the art. As non-limitative examples, it can be used an Extruder WENGER X115, X165 or X185 or any similar extruder.

The kibbles are dried, cooled and coated.

The process parameters of the Invention and of the Comparative compositions were as follows at a pilot scale (Table 1) and at an industrial factory scale (Table 2):

**TABLE 1**

| | **Comparative 1** | **Comparative 2** | **Comparative 3** | **Invention 1** | **Invention 2** | **Invention 3** |
|---|---|---|---|---|---|---|
| **Flow rate (kg/h)** | 500 | 500 | 500 | 450-470 | 500-600 | 420-450 |
| **Mixing rate (%)** | 80 | 80 | 60-80 | 80 | 80 | 80-85 |
| **Conditioner Temperature (°C)** | 77-84 | 54-92 | 81-83 | 82-84 | 80-89 | 85-90 |
| **Conditioner Steam (kg/h)** | 16 | 8-25 | 16-20 | 16-20 | 12-25 | 18 |
| **Conditioner Water (kg/h)** | 35 | 40-45 | 40-50 | 50-57 | 40-50 | 20-42 |
| **Extruder Steam (kg/h)** | 10 | 8-10 | 8-12 | 10 | 10 | 10-12 |
| **Extruder Water (kg/h)** | 60 | 40-50 | 30-35 | 20 | 30-35 | 12-20 |
| **Screw speed (rpm)** | 500 | 540 | 430-500 | 500 | 400 | 380-500 |
| **T°C product (end ext.)** | 138-145 | 137-145 | 144-146 | 156-167 | 157-166 | 152-167 |
| **Dryer Temperature (°C)** | 110 | 95-100 | 110-125 | 95 | 90-100 | 105-110 |
| **Batch cycle time (s)** | 100 | 110-140 | 120-150 | 80-135 | 40-120 | 90-115 |
| **Air flow rate Fan 1** | 3500 | 2500-4000 | 4000 | 3500-4500 | 2500-4500 | 3500 |
| **Air flow rate Fan 2** | 6000 | 3000-6000 | 6000-6500 | 6000-7500 | 5000-6000 | 5500-8000 |
| **Air flow rate Fan 3** | 6000 | 3000-6000 | 6000-6500 | 6000-7500 | 5000-6000 | 5500-8000 |
| **Exit Area (mm²/T/h)** | 230-240 | 240-250 | 237 | 160-170 | 180-190 | 167-179 |

**TABLE 2**

| | **Invention 1** | **Invention 2** | **Invention 3** |
|---|---|---|---|
| **Flow rate (kg/h)** | 6000-8000 | 4500-7000 | 5000-6000 |
| **Mixing rate (%)** | 80 | 60-80 | 70 |
| **Conditioner Temperature (°C)** | - | 94-97 | 80-86 |
| **Conditioner Steam (%)** | 6,5-9 | 5-6,6 | 4,5-5,5 |
| **Conditioner Water (%)** | 11-16 | 10-16 | 12-17 |
| **Extruder Steam (%)** | 3-4,6 | 1-3,6 | 2,5-3 |
| **Extruder Water (%)** | 0-1,2 | 1-5 | 0-1 |
| **Screw speed (rpm)** | - | 440-500 | 360-450 |
| **T°C product (end ext.)** | 148-150 | 141-147 | 147 |
| **Dryer Temperature (°C)** | - | 90 | 80-115 |
| **Batch cycle time (s)** | - | 150-180 | 210 |
| **Air flow rate Fan 1 (kg/h)** | - | 13000 | 36500 |
| **Air flow rate Fan 2 (kg/h)** | - | 26000 | 40000 |
| **Exit Area (mm²/T/h)** | 172-212 | 211-272 | 234-281 |

### Example 2

### Impact of the shape of the food compositions on density

Kibbles of the following composition (Comparative) were prepared either as conventionally round-liked shaped kibbles or as cylinder-like shaped kibbles of the disclosure according to Table 3:

**TABLE 3**

| **Raw materials** | **Composition (Comparative) (% total weight)** |
|---|---|
| **Proteins** | 27.0 |
| **Crude Fibers** | 14.8 |
| **NFE** | 34.9 |
| **Fats** | 8.0 |
| **Ashes** | 5.8 |
| **Moisture** | 9.5 |
| **TOTAL** | 100 |

A first set of kibbles was conventionally produced as described in Example 1 using an extruder with an orifice die of a diameter of 4.8 mm to obtain a round shape (round-like shaped kibbles).

A second set of kibbles was produced as described in Example 1 according the manufacturing process of the disclosure using an extruder with a diameter of 9.8 mm and a pin of diameter of 5.5 mm to obtain cylinder-like kibbles with a diameter (external) of about 15 mm and a length of about 12 mm and comprising an empty cavity inside (central hole) opens at the 2 extremities of the kibbles (cylinder-like shaped kibble).

The volume of the empty cavity of each kibble represent about 12% of the total volume of each kibble.

The density of the two set of kibbles was measured as follows: a 10-liter metal jar is filled to the brim with the kibbles and then weighed using a numeric scale (1 gram accuracy), it is so expressed in g/L.

The round-like shaped kibbles had volume density of about 255 g/L and presented a non-appetizing aspect, while the cylinder-like shaped kibbles had a density of about 205 g/L and presented a pleasant and palatable aspect. The reduction of density obtained was of about 19%.

This example shows that a composition prepared as kibbles with an empty cavity within the volume of the kibbles allow to drastically reduce the density of the kibbles.

This advantageously allows to fill a bowl of food for an animal with the same volume but with less food composition allowing to give the comforting visual impression that the bowl contains the same amount of food as with a conventionally prepared round-like shaped kibbles. That allows to favor compliance and adhesion of animals with a diet regimen proposed to reduce weight of overweight animals or with a diet regimen proposed to control and manage weight.

### Example 3

### Formulations with reduced density

To further reduced the density of the food compositions of the disclosure, it has been decided to work on the combinations and nature of ingredients entering the formulas.

Formulations for Invention 1, 2, and 3 compositions are described in Table 7 of Example 4. The compositions were prepared with a method of the disclosure as described in Example 1. The diameters of the extruders and pins used for the different compositions were adapted to produce cylinder-like kibbles with a cylinder-like hole adapted to the size of the animals and were as follows in Table 4:

**TABLE 4**

| | **Invention 1** | **Invention 2** | **Invention 3** |
|---|---|---|---|
| **Die diameter (mm)** | 8-10.5 | 10-12.5 | 5.5-7.5 |
| **Pin diameter (mm)** | 4-6 | 5-8 | 2-3.5 |

The targeted densities and dimensions (kibble whole diameter and thickness of the wall that is whole diameter minus hole diameter) for the kibbles were as follows in Table 5:

**TABLE 5**

| | **Invention 1** | **Invention 2** | **Invention 3** |
|---|---|---|---|
| **Target density (g/L)** | < 279 | < 261 | < 283 |
| **Target Kibble diameter (mm)** | 12.5 | 18.1 | 10.6 |
| **Thickness (mm)** | 13.1 | 15.4 | 9.6 |

For the avoidance of doubt, thickness corresponds here in the height.

The density of the kibbles was measure as follows: a 10-liters metal jar is filled to the brim with the kibbles and then weighed using a numeric scale (1 gram accuracy), it is so expressed in g/L. The following density results in Table 6 were obtained:

**TABLE 6**

| | **Invention 1** | **Invention 2** | **Invention 3** |
|---|---|---|---|
| **Measured density (g/L)** | 195 | 205 | 215 |

According to the compositions of the disclosure the reduction of density obtained compared to the target density is ranging from 20 to 30%. Therefore, the reduction of density of at least 10% was largely exceeded and was beyond expectation.

### Example 4

### Formulations with reduced density

A series of formulations of food compositions were prepared as kibbles in which the amount of proteins and total fibers were adjusted to meet nutritional recommendations for cats or dogs as well as to further reduce the impact on volume density and obtain a further decrease of density (see Table 7). The target objective was to obtain a reduction of density of about 10%.

Invention 1, 2 and 3 compositions were prepared according to the disclosure as indicated in Example 1 to obtain cylinder-like shaped kibbles with a central hole.

Comparative 1, 2 and 3 compositions were prepared as described in Example 1 with an extruder not equipped with a pin to obtain round-like shaped kibbles.

The process according to the disclosure can be realized using any extruder available to the person skilled in the art. As non-limitative examples, it can be used an Extruder WENGER X165 or X185.

**TABLE 7**

| | **Invention (% total weight)** | | | **Comparative (% total weight)** | | |
|---|---|---|---|---|---|---|
| **Raw materials** | **1** | **2** | **3** | **1** | **2** | **3** |
| Proteins (%) | 27 | 27 | 34 | 29,8 | 29,8 | 33,7 |
| fat (%) | 9 | 8 | 8,5 | 9,5 | 9,5 | 8,9 |
| ash (%) | 6,1 | 5,7 | 8,2 | 6,7 | 5,8 | 8,5 |
| crude fibers (%) | 15,4 | 14,8 | 13,7 | 16 | 16,9 | 14 |
| nitrogen free extract (%) | 33 | 35 | 29,1 | 28,5 | 28,5 | 28,9 |
| Moisture (%) | 9,5 | 9,5 | 6,5 | 9,5 | 9,5 | 6 |
| Total (%) | 100 | 100 | 100 | 100 | 100 | 100 |

Invention 1, 2 and 3 and Comparative 1, 2 and 3 compositions were, respectively, designed for small-size dogs, medium-size dogs, and for cats.

The density of the kibbles was measure using a 10-liter pot filled by the kibbles and then weighed, it is so expressed in g/L.

The following volume density results were obtained at a pilot scale (Table 8) and at an industrial factory scale (Table 9):

**TABLE 8**

| | **Comparative - Density (g/L)** | **Invention - Density (g/L)** | **Difference** |
|---|---|---|---|
| **Composition 1** | 335 | 195 | - 42% |
| **Composition 2** | 330 | 200 | - 39% |
| **Composition 3** | 335 | 235 | - 30% |

**TABLE 9**

| | **Comparative - Density (g/L)** | **Invention - Density (g/L)** | **Difference** |
|---|---|---|---|
| **Composition 1** | 330 | 225 | - 32% |
| **Composition 2** | 300 | 225 | - 25% |
| **Composition 3** | 340 | 250 | - 26% |

The differences between Invention and Comparative compositions are ranging from about 30% to about 42% at pilot scale (see Table 8) and from about 25% to about 32% at an industrial factory scale (see Table 9) and were largely beyond the expected and targeted values.

The following caloric density results were also obtained at a pilot scale (Table 10) and at an industrial factory scale (Table 11):

**TABLE 10**

| | **Comparative - caloric density (kcal/L)** | **Invention - caloric density (kcal /L)** | **Difference** |
|---|---|---|---|
| **Composition 1** | 906 | 527 | - 42% |
| **Composition 2** | 897 | 544 | - 39% |
| **Composition 3** | 1045 | 732 | - 30% |

**TABLE 11**

| | **Comparative - caloric density (kcal/L)** | **Invention - caloric density (kcal /L)** | **Difference** |
|---|---|---|---|
| **Composition 1** | 892 | 607 | - 32% |
| **Composition 2** | 815 | 612 | - 25% |
| **Composition 3** | 1055 | 764 | - 26% |

The differences between Invention and Comparative compositions are ranging from about 30% to about 42% at pilot scale (see Table 10) and from about 25% to about 32% at an industrial factory scale (see Table 11) and were largely beyond the expected and targeted values.

### Example 5

### Impact of formulation and shape on volume density reduction

First, a formulation of food compositions for cats was prepared in which the amount of starches was adjusted to optimize to further reduce volume density.

To measure the impact of the new formulation, Invention and Comparative compositions were prepared with an extruder not equipped with a pin to obtain round-like shaped kibbles, as described in Example 1. The volume density was measured at the outlet of the extruder, before drying.

The compositions 3 as described in Example 4 were prepared according to the manufacturing processes as described in Example 1.

The obtained results were in Table 12 as follows:

**TABLE 12**

| | **Comparative 3** | **Invention 3** |
|---|---|---|
| **Diameter (mm)** | 10.0 | 10.0 |
| **Density g/L** | 320 | 275 |

The Invention 3 composition has led to a reduction of density of about 14% with respect to the Comparative composition for kibbles manufacture with the same process and parameters.

Second, the impact of the shape on the volume density on compositions of a same formulation was evaluated.

The same Invention 3 composition was prepared either as round-like shaped kibbles or as cylinder-like shaped kibbles with a cylinder-like hole, as described in Example 1.

The volume density was measured at the outlet of the extruder, before drying.

The obtained results were in Table 13 as follows:

**TABLE 13**

| | **Round-like shaped kibbles** | **Cylinder-like shaped kibbles with hole** |
|---|---|---|
| **Diameter (mm)** | 10.0 | 10.5 |
| **Height (mm)** | 5.5 | 9.0 |
| **Density g/L** | 275 | 205 |

With the same formulations, but distinct shapes (round-like vs cylinder-like + hole) a further reduction of about 25% of density was observed.

The Invention and Comparative compositions were prepared as described in Example 4 and 1, respectively, either as cylinder-like shaped kibbles with a cylinder-like hole or as round-shaped kibbles. The Invention 1, 2 and 3 compositions have been compared to the same conditions (same day, same batches of raw material, etc.) as the Comparative compositions in order to compare the densities.

The volume density of each composition was measured as described above.

The obtained volume density was translated in useful volume occupied by the kibbles in a bow.

The useful volume allows the bulk density to be translated into the real volume of the feed ration in the bowl. It is defined by converting the bulk density (g/L) into a volume (in L) corresponding to a given daily caloric ration (kcal) using the energy of the product (kcal/kg).

The obtained results at the pilot scale (Table 14) and at the industrial factory scale (Table 15) were as follows:

**TABLE 14**

| | **Comparative - Density (g/L)** | **Invention - Density (g/L)** | **Useful Volume** |
|---|---|---|---|
| **Composition 1** | 335 | 195 | +71 % |
| **Composition 2** | 330 | 200 | + 65 % |
| **Composition 3** | 335 | 235 | + 42 % |

**TABLE 15**

| | **Comparative - Density (g/L)** | **Invention - Density (g/L)** | **Useful Volume** |
|---|---|---|---|
| **Composition 1** | 330 | 225 | + 47 % |
| **Composition 2** | 300 | 225 | + 33 % |
| **Composition 3** | 340 | 250 | +39% |

This data shows a visual striking difference between the Invention and Comparative compositions providing the "effect" of a full bowl for the animal and its owner.

Further, this difference of volume may have a beneficial impact on the eating behavior, in particular by preventing the phenomenon of kibbles swallowing and binge eating. This will result in reduction of caloric intake.

### EXAMPLE 6

### Satietogenic effect study _ Invention vs Comparative round vs Comparative cross shape

Comparative 1 and 2 and Invention 1 and 2 compositions were prepared according to the processes described in Example 1 and 3, respectively. The aim of this example was to investigate the effect of the Invention composition on voluntary energy intake in dogs. The satietogenic effect of the compositions was evaluated by measuring the average voluntary intake per meal and the meal ingestion speed over the first 2 meals.

Healthy adult female colony dogs (ten small (6.53±0.34kg) and ten medium (13.46±2.16kg)) were randomized in two groups in a 14d cross-over design and fed either the Invention or the Comparative diets (2700kcal/kg; 605kcal/L vs 870kcal/L). The protocol was performed on 3 non-consecutive days (100% MER offered over 2 initial meals and 300% MER over 2 remaining meals). Food intake was reduced to 80% MER for the other days. On test days, voluntary food intake (kcal/kg^{0.75}) and, meal speed (kcal/kg^{0.75}/min) were measured. Non-transformed data were analyzed using a linear mixed model procedure with product, meal and interactions as fixed effects, and dog, week, and their interactions with meal as random terms.

Average voluntary intake per meal with the Invention compositions was significantly reduced by 29 and 16% for Invention 1 and 2 compositions respectively (p<0.01), compared to Comparative 1 and 2 round composition (compositions 1: 31.3±33.7 vs 44±35.6kcal/kg^{0.75}, compositions 2: 34.9±30.7 vs 41.7±33.6kcal/kg^{0.75}). Meal ingestion speed over the first 2 meals was significantly reduced by 40 and 52% for compositions 1 and 2 respectively (p<0.001) (compositions 1: 8.0±2.7 vs 13.3±3.4kcal/kg^{0.75}/min, compositions 2: 8.0±2.2 vs 16.7±7.3kcal/kg^{0.75}/min).

As shown by this example, due to a high satietogenic effect, the Invention compositions according to the disclosure allow to reduce average voluntary intake per meal in pets, and to reduce meal ingestion speed in pets. Therefore, the Invention compositions of the disclosure proved to be particularly useful, either as a balanced nutritionally complete food or as a functional complement, for the weight management or weight control of animals, and more particularly for preventing and/or treating overweight or obesity in an animal in need thereof. In conclusion, reducing the caloric density in the Invention 2 composition reduces the average voluntary intake and the meal ingestion speed in small and medium dogs.

The same experiment was performed on the same ten medium dogs (13.46±2.16kg) to test the effect of a cross-shaped non-expanded Comparative 2 diet versus the Invention 2 composition on voluntary energy intake in dogs. Average voluntary intake per meal with the Invention composition 2 was reduced by 14,6 % compared to the non-expanded cross shape Comparative 2 composition (46.9±47.5 vs 54,9±58.1 kcal/kg^{0.75}). Meal ingestion speed on the first meal was reduced by 29.3% (17.8±10.5 vs 25.2±13.8kcal/kg^{0.75}/min).

In conclusion, despite the fact the cross shape reduces the average voluntary intake and the meal ingestion speed, the Invention 2 composition had a higher impact on these two parameters.

### EXAMPLE 7

### Animal model for weight loss

Twelve females and two male beagle dogs aged of 7.7 ± 0.2 years were included in this protocol. All dogs were overweighed Body Weight (BW): 14.6 ± 0.6 kg) according to their body condition score (BCS of 7 on a 9-point scale) and were declared healthy based on clinical examination, blood cell count and serum biochemistry. Animals were housed in pairs based on their social compatibility, in an outdoor enclosure (2.0 x 5.0m) with a sheltered place to sleep. Dogs were vaccinated and dewormed twice a year and their weight were taken at least once every week.

Before the study, all dogs ate a Control Diet (14.0% fat, 25.0% protein, ME: 3910 kcal/kg). For the study, the dogs were fed with the Invention 2 composition in order to induced weight loss (around 1.5% per week). The optimal weight of each dog was determined with the initial BCS (7) and the optimal BCS (5) using the following formula: *Optimal weight - 5 *Initial weight* / *7.* Rations was adjusted twice every week according to the weight variation (rations were increased by 10% for a weight loss greater than 3%). Dogs ate once a day (the morning) and water was available ad libitum. BW was carried out twice every week and ICC were carried out once. Once Each dog has reached the optimal weight or BCS at 4-5 (in black in Figures 2 and 3), the Invention 2 composition was replaced by a classic diet (in grey in Figures 2 and 3).

After the period during the dogs were fed with the Invention 2 composition, their weight the was significant lower compared to the start of the study (End: 12.35 (9.780 - 14.60) kg vs Start: 14.80 (11.14 - 17.24); *p<0.001*) (Figure 1). The average time to obtain the ideal weight was 5.8 ± 0.5 weeks (Figure 2). The mean weight loss was 15.58 ± 1.021% (Figure 3). It can also be mentioned that, once the dogs are fed with a classic diet, the dogs stop to lose weight compared to the previous regimen using the Invention 2 composition and, moreover, none of the dog are gaining weight.

This clearly demonstrate that the composition according to the disclosure i) does have an impact on the weight loss during the period of time the animal is fed with and ii) this impact continues after for a period of at least 7 weeks.

### Example 8

### Novel Invention Compositions in the purpose of overweight prevention

In a first embodiment, the Invention composition target is sick animal, obese. In a second embodiment ("treatment of obesity"), the disclosed composition has been also used to develop food in the goal of preventing weight gain, for animals slightly overweight ("prevention of obesity"). New compositions have been developed according to Table 16 for dogs (Invention 4) and cats (Invention 5):

**TABLE 16**

| | **Comparative (% total weight)** | | **Invention (% total weight)** | |
|---|---|---|---|---|
| **Raw materials** | 4 | 5 | 4 | 5 |
| proteins (%) | 26 | 36 | 26 | 36 |
| fat (%) | 12 | 10 | 12 | 10 |
| ash (%) | 5,4 | 7,4 | 5,7 | 7,2 |
| crude fibers (%) | 6,1 | 10,3 | 6,9 | 10,6 |
| nitrogen free extract (%) | 41 | 30,8 | 39,9 | 30,7 |
| Moisture (%) | 9,5 | 5,5 | 9,5 | 5,5 |
| Total (%) | 100 | 100 | 100 | 100 |

The Invention (4 and 5) and Comparative (4 and 5) compositions were prepared as described in Example 4 and 1, respectively, either as cylinder-like shaped kibbles with a cylinder-like hole or as round-shaped kibbles. Following Table 17 regroups the data on the respective density of these compositions.

**TABLE 17**

| | **Comparative - Density (g/L)** | **Invention - Density (g/L)** | **Useful Volume** |
|---|---|---|---|
| **Composition 4** | 350 | 260 | +35% |
| **Composition 5** | 305 | 270 | + 13 % |

A first experiment has been done on cats in order to confirm that cats will eat he composition according to the disclosure. In this aim, the Invention 5 composition has been compared with the Comparative 5 composition. The results for cat (Invention 5 and Comparative 5 compositions) obtained are summarized in the following Table 18.

Based on these results, it appears that the Invention 5 composition is significatively more consumed than the Comparative 5 composition despite the volume of the Invention 5 composition which forces cats to chew a lot.

**Table 18**

| | Invention 5 | Comparative 5 | No choice |
|---|---|---|---|
| Preference | 44% | 22% | 34% |
| First Choice | 58% | 42% | - |

A second experiment has been done in the same goal on dog in order to evaluate the time needed for the animal to finish its meal. For this, a CTI study ("Consumer Technical Insights") has been performed in UK on 104 owners of small dogs (between 4 and 12kg), using the Invention 4 composition. Two questions have been asked to people: "How long does it usually take for your dog to finish their dry dog food?" and "How long does it take for your dog to finish the same ration with this new food?"

The results are presented in Table 19 and in Figure 4. In average, people answered that their dog has taken more time to finish his bowl, showing that the Invention composition tends to decrease the ingestion speed and so allows to prevent weight gain on dogs prone to overweight.

**Table 19**

| | **Usual Dry Food** | **Invention 4** |
|---|---|---|
| **Average length of time to finish** | 4.3 minutes | 7.3 minutes |
| | Assessed amongst dogs eating for up to 20 minutes | |

### Example 9

### Novel Invention Compositions in the purpose of functional complements

The disclosure has been also used to develop new functional complements, in the purpose of creating very low-calorie treats for pets, bringing nutritional benefits without inducing weight gain. Invention 6 composition has the following nutritional composition (Table 20):

**Table 20**

| | **\Comparative 6 (% total weight)** | **Invention 6 (% total weight)** |
|---|---|---|
| **Raw materials** | 6 | 6 |
| proteins (%) | 25 | 25 |
| fat (%) | 12 | 8 |
| ash (%) | 5,8 | 6,0 |
| crude fibers (%) | 3,5 | 9,6 |
| nitrogen free extract (%) | 44,2 | 41,9 |
| Moisture (%) | 9,5 | 9,5 |
| Total (%) | 100 | 100 |

The Invention 6 compositions was prepared as described in Example 4 and 1, as cross shaped kibbles with a cylinder-like hole. The Comparative 6 composition is an existing reference (Royal Canin).

The difference of volume density for the Invention 6 and Comparative 6 composition are reproduced in the following Table 21:

**Table 21**

| | **Comparative Density (g/L)** | **Invention Density (g/L)** | **Useful Volume** |
|---|---|---|---|
| **Composition 6** | 390 | 250 | + 56 % |

The difference of caloric density for the Invention 6 and Comparative 6 compositions are reproduced in the following Table 22:

**Table 22**

| | **Comparative Density (kcal/L)** | **Invention Density (kcal/L)** | **Difference** |
|---|---|---|---|
| **Composition 6** | 1405 | 769 | - 45 % |

This difference in caloric densities allows to the Invention 6 to decrease the number of calories/kibble and so to allow pet owners to give more treats to their pet. Palatability has been evaluated on dogs and is very well accepted, despite low-calorie content (data not shown).

## Claims

1. A dry food composition having a caloric density ranging from about 530 kCal/L to about 800 kCal/L the food composition comprising, by weight relative to the total weight of said composition:
a. a protein in an amount ranging from about 20% to about 36%,
b. a total dietary fiber in an amount ranging from about 15% to about 30%, and
c. a starch in an amount ranging from about 15% to about 32%,
wherein the food composition is **characterized in that** it has a porosity ranging of from about 40% to about 70%,
the composition being cylinder-like kibbles comprising a central or substantially cylinder-like empty cavity, each kibble defining a total volume and comprising, within said total volume, at least one empty cavity comprising at least one aperture and said cavity representing a volume of at least 20% of the total volume, the kibble having an external diameter ranging from 8 mm to 25 mm, an internal diameter ranging from 2 mm to 15 mm, and a longitudinal dimension from 5 mm to 22 mm.

2. The dry food composition according to any of the preceding claims, **characterized in that** said it comprises proteins at least partially hydrolyzed, and preferably totally hydrolyzed.

3. The dry food composition according to any of the preceding claims, **characterized in that** said starch is selected from starch having an amylose to amylopectin ratio not exceeding about 30:70, preferentially not exceeding about 25:75, and still more preferentially not exceeding about 20:80, and more preferably being about 15:85.

4. The dry food composition according to any of the preceding claims, **characterized in that** it has a caloric density ranging from about 550 kCal/L to about 770 kCal/L.

5. The dry food composition according to any of the preceding claims, **characterized in that** it has a volume density ranging from about from about 150 g/L to about 300 g/L, preferably from about 160 g/L to about 270 g/L, preferably from about 180 g/L to about 250 g/L, and more preferably from about 190 g/L to about 240 g/L.

6. The dry food composition according to any of the preceding claims, **characterized in that** it consists of a nutritionally complete food or a functional complement.

## Patentansprüche

1. Trockenfutterzusammensetzung mit einer Kaloriendichte im Bereich von etwa 530 kcal/L bis etwa 800 kcal/L, wobei die Futterzusammensetzung, gewichtsbezogen auf das Gesamtgewicht der Zusammensetzung, umfasst:
a. Protein in einer Menge im Bereich von etwa 20 % bis etwa 36 %,
b. Gesamtballaststoff in einer Menge von etwa 15 % bis etwa 30 % und
c. Stärke in einer Menge von etwa 15 % bis etwa 32 %, wobei die Futterzusammensetzung **dadurch gekennzeichnet ist, dass** sie eine Porosität im Bereich von etwa 40 % bis etwa 70 % aufweist,
wobei es sich bei der Zusammensetzung um zylinderartige Kroketten handelt, die einen zentralen oder im Wesentlichen zylinderartigen leeren Hohlraum umfassen, wobei jede Krokette ein Gesamtvolumen definiert und innerhalb des Gesamtvolumens mindestens einen leeren Hohlraum umfasst, der mindestens eine Öffnung aufweist, und wobei der Hohlraum ein Volumen von mindestens 20 % des Gesamtvolumens repräsentiert, wobei die Krokette einen Außendurchmesser von 8 mm bis 25 mm, einen Innendurchmesser von 2 mm bis 15 mm und ein Längsmaß von 5 mm bis 22 mm aufweist.

2. Trockenfutterzusammensetzung nach einem der vorhergehenden Ansprüche, **dadurch gekennzeichnet, dass** sie Proteine umfasst, die zumindest teilweise hydrolysiert und vorzugsweise vollständig hydrolysiert sind.

3. Trockenfutterzusammensetzung nach einem der vorhergehenden Ansprüche, **dadurch gekennzeichnet, dass** die Stärke ausgewählt ist aus Stärke mit einem Amylose-Amylopektin-Verhältnis von nicht mehr als etwa 30:70, vorzugsweise nicht mehr als etwa 25:75 und noch bevorzugter nicht mehr als etwa 20:80, und besonders bevorzugt etwa 15:85.

4. Trockenfutterzusammensetzung nach einem der vorhergehenden Ansprüche, **dadurch gekennzeichnet, dass** sie eine Kaloriendichte im Bereich von etwa 550 kcal/L bis etwa 770 kcal/L aufweist

5. Trockenfutterzusammensetzung nach einem der vorhergehenden Ansprüche, **dadurch gekennzeichnet, dass** sie eine Volumendichte von etwa 150 g/L bis etwa 300 g/L, vorzugsweise von etwa 160 g/L bis etwa 270 g/L, vorzugsweise von etwa 180 g/L bis etwa 250 g/L und besonders bevorzugt von etwa 190 g/L bis etwa 240 g/L aufweist.

6. Trockenfutterzusammensetzung nach einem der vorhergehenden Ansprüche, **dadurch gekennzeichnet, dass** sie aus einem ernährungsphysiologisch vollständigen Futter oder einem funktionellen Ergänzungsmittel besteht.

## Revendications

1. Composition alimentaire sèche ayant une densité calorique allant d'environ 530 kcal/L à environ 800 kcal/L, la composition alimentaire comprenant, en poids par rapport au poids total de ladite composition :
a. une protéine dans une quantité allant d'environ 20 % à environ 36 %,
b. une quantité totale de fibres alimentaires allant d'environ 15 % à environ 30 %, et
c. un amidon en une quantité allant d'environ 15 % à environ 32 %,
dans laquelle la composition alimentaire est **caractérisée en ce qu'**elle présente une porosité allant d'environ 40 % à environ 70 %,
la composition étant des croquettes cylindriques comprenant une cavité vide centrale ou sensiblement cylindrique, chaque croquette définissant un volume total et comprenant, à l'intérieur dudit volume total, au moins une cavité vide comprenant au moins une ouverture et ladite cavité représentant un volume d'au moins 20 % du volume total, la croquette ayant un diamètre extérieur compris entre 8 mm et 25 mm, un diamètre intérieur compris entre 2 mm et 15 mm, et une dimension longitudinale comprise entre 5 mm et 22 mm.

2. Composition alimentaire sèche selon l'une quelconque des revendications précédentes, **caractérisée en ce qu'**elle comprend des protéines au moins partiellement hydrolysées, et de préférence totalement hydrolysées.

3. Composition alimentaire sèche selon l'une quelconque des revendications précédentes, **caractérisée en ce que** ledit amidon est choisi parmi un amidon ayant un rapport amylose sur amylopectine ne dépassant pas environ 30:70, préférentiellement ne dépassant pas environ 25:75, et encore plus préférentiellement ne dépassant pas environ 20:80, et plus préférablement qui est d'environ 15:85.

4. Composition alimentaire sèche selon l'une quelconque des revendications précédentes, **caractérisée en ce qu'**elle a une densité calorique allant d'environ 550 kcal/L à environ 770 kcal/L.

5. Composition alimentaire sèche selon l'une quelconque des revendications précédentes, **caractérisée en ce qu'**elle a une densité volumique allant d'environ 150 g/L à environ 300 g/L, de préférence d'environ 160 g/L à environ 270 g/L, de préférence d'environ 180 g/L à environ 250 g/L, et plus préférablement d'environ 190 g/L à environ 240 g/L.

6. Composition alimentaire sèche selon l'une quelconque des revendications précédentes, **caractérisée en ce qu'**elle consiste en un aliment complet sur le plan nutritionnel ou un complément fonctionnel.
